(19) Europäisches Patentamt / European Patent Office / Office européen des brevets

(11) **EP 3 064 437 B1**

(12) **FASCICULE DE BREVET EUROPEEN**

(45) Date de publication et mention
de la délivrance du brevet:
**22.08.2018 Bulletin 2018/34**

(51) Int Cl.:
**B64D 43/00** *(2006.01)*    **B64C 27/04** *(2006.01)*
**G01D 7/02** *(2006.01)*    **G07C 5/08** *(2006.01)*

(21) Numéro de dépôt: **16156282.2**

(22) Date de dépôt: **18.02.2016**

(54) **PROCEDE ET DISPOSITIF DE DETERMINATION ET D'OPTIMISATION DE PARAMETRES CARACTERISTIQUES DU FONCTIONNEMENT D'UN AERONEF A VOILURE TOURNANTE**

VERFAHREN UND VORRICHTUNG ZUR BESTIMMUNG UND OPTIMIERUNG VON KENNWERTEN DER BETRIEBSFUNKTION EINES DREHFLÜGELFLUGZEUGS

A METHOD AND A DEVICE FOR DETERMINING AND OPTIMIZING PARAMETERS THAT ARE CHARACTERISTIC OF THE OPERATION OF A ROTARY WING AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2015 FR 1500411**

(43) Date de publication de la demande:
**07.09.2016 Bulletin 2016/36**

(73) Titulaire: **Airbus Helicopters**
**13725 Marignane Cedex (FR)**

(72) Inventeur: **GERMANETTI, Serge**
**13005 MARSEILLE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 505 502**    **WO-A2-2006/081334**
**DE-U1- 29 703 902**    **US-A1- 2005 278 084**

## Description

La présente invention est du domaine de l'aide au pilotage des véhicules, et des aéronefs à voilures tournantes en particulier.

La présente invention concerne un procédé et un dispositif de détermination et d'optimisation de paramètres caractéristiques du fonctionnement d'un véhicule et notamment d'un aéronef à voilure tournante.

Le fonctionnement d'un véhicule s'effectue généralement sous la surveillance de plusieurs paramètres caractéristiques par l'intermédiaire de plusieurs instruments situés sur une planche de bord du véhicule. Ces paramètres caractéristiques sont représentatifs du fonctionnement courant du véhicule et en particulier de son moteur ou bien de son installation motrice.

Pour des raisons physiques, il existe de nombreuses limitations sur ces paramètres caractéristiques qui doivent être prises en compte à chaque instant du fonctionnement du véhicule. Ces différentes limitations peuvent dépendre des conditions extérieures ainsi que du mode de fonctionnement du véhicule.

Par exemple, pour un véhicule automobile, ces paramètres caractéristiques peuvent être la vitesse de rotation de son moteur, la température de l'eau de refroidissement de ce moteur ou bien la température de l'huile lubrifiant ce moteur.

Selon un autre exemple, le véhicule peut être un aéronef à voilure tournante comportant une installation motrice munie de deux turbomoteurs et d'une boîte de transmission principale de puissance, l'installation motrice entraînant en rotation au moins un rotor principal et éventuellement un rotor anticouple, tel un rotor arrière. Dans ce cas, ces paramètres caractéristiques peuvent être, entre autres, la vitesse de rotation $Ng$ du générateur de gaz de chaque turbomoteur, la température $T4$ d'éjection des gaz à l'entrée de la turbine libre de chaque turbomoteur et le couple moteur $C_m$ de chaque turbomoteur.

Ainsi, le pilote d'un véhicule doit surveiller, au cours du fonctionnement de ce véhicule et en permanence, les valeurs courantes de ces paramètres caractéristiques sur plusieurs instruments situés sur la planche de bord du véhicule et comparer les valeurs courantes de ces paramètres caractéristiques avec leurs limitations respectives.

Dans le cas d'un aéronef à voilure tournante comportant une installation motrice munie de deux turbomoteurs, le pilote doit surveiller, au cours du fonctionnement de l'aéronef et en permanence, au moins trois instruments par turbomoteur, soit au moins six instruments. Ce pilote est alors sensé détecter, pour chaque turbomoteur une incohérence entre les valeurs courantes de ces paramètres caractéristiques et leurs limitations respectives sur ces au moins six instruments. Ceci nécessite une attention particulière du pilote, qui doit par ailleurs être également concentré sur le vol proprement dit de l'aéronef.

De plus, ces limitations sont généralement différentes selon la phase de vol de l'aéronef et/ou les conditions extérieures telles que l'altitude par exemple. En effet, selon chaque phase de vol et/ou les conditions extérieures ainsi que selon le mode de fonctionnement de l'installation motrice, la puissance maximale que peut fournir l'installation motrice est différente et sa durée de disponibilité peut également être limitée.

Par exemple, pour la phase de décollage de l'aéronef, une puissance maximale au décollage PMD est utilisable pendant une durée limitée de l'ordre de cinq à dix minutes, correspondant à un niveau de couple pour la boîte de transmission principale de puissance et un échauffement de chaque turbomoteur admissibles sans dégradation notable de l'installation motrice. De même, après la phase de décollage, une puissance maximale en continu PMC est utilisable de façon continue, sans limitation de durée.

En outre, il existe également des régimes de surpuissance en urgence utilisés sur une installation motrice munie d'au moins deux turbomoteurs lorsque l'un des turbomoteurs est en panne. Le ou les turbomoteurs valides peuvent alors fournir des puissances d'urgence pendant des durées limitées, ces puissances d'urgence étant supérieures à la puissance maximale en continu PMC afin de compenser cette panne. Cependant, l'utilisation de ces puissances d'urgence nécessitent ensuite généralement des opérations de maintenance spécifiques.

Par suite, les limitations des différents paramètres caractéristiques du fonctionnement de l'aéronef peuvent être différentes notamment selon la puissance disponible au niveau de chaque turbomoteur.

Aujourd'hui, certaines aides apportées au pilote permettent de limiter les paramètres que doit surveiller le pilote.

On connaît notamment les documents FR2749545 et FR2756256 qui décrivent un Instrument de Première Limitation souvent désignée par l'acronyme « IPL ». Cet Instrument de Première Limitation identifie, parmi différents paramètres caractéristiques, le paramètre caractéristique critique comme étant celui qui est le plus proche de sa valeur limite. La valeur courante de ce paramètre caractéristique critique et sa valeur limite sont alors regroupées sur un affichage unique, respectivement pour chaque turbomoteur le cas échéant, permettant de limiter le nombre d'instruments nécessaires pour surveiller le fonctionnement de l'aéronef afin de simplifier la tâche du pilote. Ces IPL permettent ainsi d'afficher par l'intermédiaire de la valeur courante du paramètre caractéristique critique et de sa valeur limite une marge de puissance dont dispose l'aéronef ou bien chaque turbomoteur.

Par exemple, la valeur courante du paramètre caractéristique critique et sa valeur limite peuvent être affichées selon une échelle graduée en couple moteur pour chaque turbomoteur caractérisant ainsi la marge de puissance disponible de chaque turbomoteur de l'aéronef, comme décrit dans le document FR2749545.

La valeur courante du paramètre caractéristique critique et sa valeur limite peuvent également être affichées selon une échelle graduée en pas collectif, le pas collectif indiquant l'incidence des pales du rotor principal de l'aéronef par rapport au vent incident induite par la commande de pas collectif de ces pales, caractérisant ainsi la marge de puissance disponible de l'aéronef dans son ensemble, comme décrit dans le document FR2756256.

On connait également les documents WO 2006/081334 et US 2005/278084 qui décrivent des indicateurs destinés à un aéronef, déterminant et affichant au moins la valeur du paramètre caractéristique critique.

L'indicateur selon le document WO 2006/081334 détermine et affiche également un paramètre caractéristique dont la valeur est la importante et qui peut correspondre à une manoeuvre prédéterminée de l'aéronef.

L'indicateur selon le document US 2005/278084 détermine et affiche également quant à lui une valeur prédictive du paramètre caractéristique critique qui est déterminée en fonction de sa valeur courante et de sa variation.

En outre, le document EP 2505502 décrit un procédé et un dispositif d'aide au pilotage d'un aéronef muni de deux rotors, par exemple un rotor de sustentation et un rotor arrière anticouple. Une marge de puissance vis-à-vis d'une puissance maximale connue du moteur de l'aéronef est déterminée selon ce paramètre caractéristique dont la valeur est la plus proche de sa limite de fonctionnement. Une courbe limite de puissance disponible, prenant en compte cette marge de puissance est affichée au pilote selon un diagramme dans un repère formé par le premier pas collectif du premier rotor et le second pas collectif du second rotor. Un pointeur caractérisé par la position courante des premier et second pas collectifs est également affiché. Ainsi, le pilote sait la puissance supplémentaire disponible sur le premier rotor et le second rotor.

De plus, une courbe prenant en compte un seuil d'endommagement du moteur peut être affichée qui correspond à la puissance maximale utilisable sans risque d'endommager le moteur. Cette puissance maximale utilisable est déterminée à partir de la puissance maximale connue du moteur de l'aéronef qui est fournie par le constructeur du moteur.

Enfin, le document DE 29703902 fait parti de l'arrière plan technologique de l'invention.

Toutefois, les limitations utilisées par les instruments de la planche de bord et cet IPL en particulier ne représentent pas les limitations réelles de chaque turbomoteur, mais des limitations prédéterminées correspondant par exemple à une puissance minimum garantie d'un turbomoteur sur sa durée de sa vie.

En effet, le motoriste établit, par calculs ou bien par essais, les courbes de puissance disponible d'un turbomoteur en fonction notamment de l'altitude de l'aéronef et de la température extérieure, et cela pour chacun des régimes de puissance utilisables par chaque turbomoteur. De plus, le motoriste détermine ces courbes de puissance disponible selon différents niveau de vieillissement de chaque turbomoteur entre un turbomoteur neuf et un turbomoteur arrivé à la fin de sa durée de vie.

Par suite, une puissance minimum garantie sur l'ensemble de la durée de vie d'un turbomoteur est définie. La valeur de cette puissance minimum garantie est variable notamment en fonction notamment de l'altitude de l'aéronef et de la température extérieure, et correspond à la puissance fournie par un turbomoteur vieilli à savoir un turbomoteur ayant atteint sa durée de vie maximale. Ainsi, tout turbomoteur en fonctionnement normal, c'est-à-dire ne subissant aucune panne, peut toujours délivrer une puissance supérieure et au minimum égale à cette puissance minimum garantie sur l'ensemble de sa durée de vie.

De la sorte, les instruments de la planche de bord et l'IPL en particulier qui utilisent des limitations correspondant à cette puissance minimum garantie sont favorables en termes de sécurité, le pilote disposant toujours d'une puissance réellement disponible au niveau de chaque turbomoteur qui est généralement supérieure et au minimum égale à la puissance maximum indiquée par les instruments de la planche de bord ou par l'IPL.

A contrario, l'utilisation de chaque turbomoteur n'est pas optimisée, la puissance utilisée étant la puissance minimum garantie et non la puissance maximum réellement disponible. De fait, chaque turbomoteur est sous utilisé. L'utilisation de limitations correspondant à la puissance maximum réellement disponible permettrait d'améliorer les performances de l'aéronef telles que la masse totale transportée ou la distance franchissable par exemple.

De plus, les instruments de la planche de bord d'un véhicule ainsi que l'IPL pour les aéronefs indiquent les valeurs courantes et les limites des paramètres caractéristiques. De fait, lorsqu'un pilote envisage de réaliser une manoeuvre, il doit se fier à son expérience et à la différence qu'il constate entre ces valeurs courantes et leurs limites afin d'estimer s'il dispose d'une marge suffisante sur les paramètres caractéristiques pour réaliser cette manoeuvre.

Ensuite, le pilote aura la confirmation seulement au cours de cette manoeuvre qu'aucun paramètre caractéristique ne dépasse sa limite et qu'il peut donc réaliser cette manoeuvre en toute sécurité.

Dans le cas contraire et suivant la manoeuvre réalisée, le pilote peut arrêter cette manoeuvre pour revenir à une phase de vol sûre, chaque paramètre caractéristique restant alors en dessous de sa limite. C'est typiquement le cas lorsque le pilote d'un aéronef engage une descente et qu'il peut utiliser l'inertie de l'aéronef et/ou la puissance totale disponible au niveau de l'installation motrice pour réaliser une manoeuvre d'évitement d'un obstacle. Cependant, pour certaines manoeuvres, un retour en arrière est impossible une fois la manoeuvre engagée et un accident peut se produire alors, par exemple lors d'un atterrissage et de la transition hors effet de sol et avec effet de sol.

Cette mauvaise estimation du pilote de la marge disponible, notamment en termes de puissance, est à l'origine de nombreux accidents d'aéronefs à voilures tournantes et en particulier lors des phases d'atterrissage, de vols stationnaires en particulier à proximité du sol et de décollage en mode vertical pur.

La présente invention a alors pour objet de proposer un procédé et un dispositif permettant de s'affranchir des limitations mentionnées ci-dessus, en permettant notamment au pilote de visualiser simultanément les valeurs courantes et les limites réelles d'au moins un paramètre caractéristique du fonctionnement de ce véhicule, ainsi que la valeur de chaque paramètre caractéristique nécessaire à la réalisation d'une manoeuvre prédéterminée.

Un objet selon la présence invention est un procédé de détermination de paramètres caractéristiques d'un véhicule, le véhicule comportant une installation motrice munie d'au moins un moteur et d'un moyen de transmission mécanique de puissance, des moyens de commande des déplacements du véhicule, une pluralité de capteurs, au moins un moyen de calcul, au moins une mémoire et au moins un moyen de visualisation.

Le véhicule est par exemple un aéronef à voilure tournante comportant un rotor principal muni de pales principales, un rotor anticouple muni de pales secondaires et une installation motrice. Le moyen de transmission mécanique de puissance est une boîte de transmission principale de puissance entraînant en rotation le rotor principal et le rotor anticouple par l'intermédiaire d'au moins un moteur qui peut être un turbomoteur. Les moyens de commande sont des moyens de commande de la variation du pas collectif et du pas cyclique des pales principales du rotor principal ainsi que du pas collectif des pales secondaires du rotor anticouple.

Au cours de ce procédé de détermination de paramètres caractéristiques d'un véhicule,

- on mesure différentes informations relatives à l'environnement du véhicule, et/ou à l'état et au fonctionnement du véhicule et/ou à l'état et au fonctionnement de l'installation motrice et/ou à l'état des moyens de commande, et/ou à la position et aux déplacements du véhicule par rapport à son environnement,
- on détermine au moins une première valeur $P_i\_lim$ égale à une valeur limite qu'un paramètre $P_i$ ne doit pas dépasser, $P_i$ étant un paramètre caractéristique relatif à l'état ou au fonctionnement du véhicule, ou à l'état ou au fonctionnement de l'installation motrice, ou à l'état des moyens de commande, ou à la position ou aux déplacements du véhicule par rapport à son environnement,
- on détermine au moins une seconde valeur $P_i\_X$ à laquelle le paramètre $P_i$ doit être égal afin que le véhicule puisse effectuer une manoeuvre $X$ prédéterminée, et
- on affiche simultanément sur une même représentation de type graphique chaque première valeur $P_i\_lim$ et chaque seconde valeur $P_i\_X$ afin de mettre clairement en évidence la position relative d'une première valeur $P_i\_lim$ vis-à-vis de chaque seconde valeur $P_i\_X$ pour chaque paramètre $P_i$.

Le paramètre $P_i$ peut être un paramètre caractéristique relatif à l'état ou au fonctionnement de l'installation motrice tel qu'une puissance totale ou bien un couple total fourni par l'installation motrice ou bien un couple en sortie du moyen de transmission mécanique. Le paramètre $P_i$ peut également être un paramètre relatif à l'état ou au fonctionnement d'un moteur de l'installation motrice, tel qu'une puissance ou bien un couple fourni par ce moteur, une température à l'intérieur de ce moteur ou bien une vitesse de rotation d'un élément de ce moteur tel un arbre de transmission.

Le paramètre $P_i$ peut également être un paramètre relatif à la position ou aux déplacements du véhicule par rapport à son environnement, par exemple une vitesse du véhicule par rapport à l'air ou bien une vitesse du véhicule par rapport au sol, ou encore une hauteur du véhicule par rapport à une référence telle que le sol.

Lorsque le véhicule est un aéronef à voilure tournante, le paramètre $P_i$ peut aussi être, entre autres, un couple du rotor principal ou bien un couple du rotor anticouple, une position de gouverne de l'aéronef ou bien une valeur de pas collectif ou cyclique des pales principales du rotor principal ou des pales secondaires du rotor anticouple, une position des commandes de pas collectif ou de pas cyclique des pales principales du rotor principal ou bien une position de la commande de pas collectif des pales secondaires du rotor anticouple.

Le paramètre $P_i$ peut également être une combinaison logique ou arithmétique d'au moins deux caractéristiques précédemment citées.

De la sorte, chaque paramètre $P_i$ permet de caractériser le fonctionnement ou bien l'état du véhicule et/ou de son installation motrice ou encore une position ou une vitesse du véhicule.

Avantageusement, chaque première valeur $P_i\_lim$ est égale à une valeur limite actuelle du paramètre $P_i$ et non à une limite prédéfinie. Chaque première valeur $P_i\_lim$ est déterminée à partir d'une ou plusieurs des différentes informations mesurées. Cette première valeur $P_i\_lim$ prend ainsi en compte les caractéristiques courantes du véhicule, de son installation motrice et de son environnement. Cette première valeur $P_i\_lim$ peut également prendre en compte un état de vieillissement du véhicule et/ou de son installation motrice. Chaque première valeur $P_i\_lim$ peut être déterminée en utilisant des courbes de fonctionnement du véhicule, et plus particulièrement des courbes de performances du véhicule, corrélées avec les courbes de puissance des moteurs de ce véhicule.

Avantageusement, les courbes de performances du véhicule sont définies en prenant en compte l'implantation de chaque moteur dans le véhicule.

Chaque seconde valeur $P_{i}\_X$ est égale quant à elle à une valeur que le paramètre $P_i$ doit prendre afin que le véhicule puisse effectuer une manoeuvre X prédéterminée. Chaque seconde valeur $P_{i}\_X$ peut être déterminée à partir d'une ou plusieurs des différentes informations mesurées et des caractéristiques nécessaires à la réalisation de cette manoeuvre X prédéterminée.

Ainsi, la différence entre la première valeur $P_{i}\_lim$ et la seconde valeur $P_{i}\_X$ est visible sur la représentation de type graphique. Le pilote du véhicule visualise directement s'il dispose d'une marge sur le paramètre $P_i$ pour réaliser cette manoeuvre X prédéterminée vis-à-vis de la première valeur $P_{i}\_lim.$

Les secondes valeurs $P_{i}\_X$ auxquelles le paramètre $P_i$ doit être égal afin que le véhicule puisse effectuer la manoeuvre X prédéterminée peuvent former une plage de valeurs de ce paramètre $P_i.$ Cette plage est ainsi constituée de secondes valeurs $P_{i}\_X$ acceptables pour que le véhicule puisse réaliser la manoeuvre X avec des marges de sécurité. Ces marges de sécurité permettent par exemple de prendre en compte des approximations dans la mesure des différentes informations, des caractéristiques nécessaires à la réalisation de cette manoeuvre X prédéterminée ou bien dans la connaissance de la masse du véhicule.

De plus, au cours de ce procédé de détermination de paramètres caractéristiques d'un véhicule, on peut déterminer une troisième valeur $P_{i}\_inst$ égale à une valeur instantanée de chaque paramètre $P_i,$ puis afficher sur la représentation de type graphique chaque troisième valeur $P_{i}\_inst.$

Ainsi, le pilote du véhicule visualise directement d'une part une différence entre la troisième valeur $P_{i}\_inst$ et la première valeur $P_{i}\_lim$ et d'autre part la marge dont dispose le pilote entre la troisième valeur $P_{i}\_inst$ et la seconde valeur $P_{i}\_X$ nécessaire pour réaliser la manoeuvre X prédéterminée.

Par ailleurs, la représentation de type graphique peut prendre plusieurs formes. Par exemple, la représentation de type graphique peut être un cadran de forme sensiblement circulaire. Une aiguille indique la troisième valeur $P_{i}\_inst$ et des repères à l'extérieur du cadran indiquent la première valeur $P_{i}\_lim$ et la seconde valeur $P_{i}\_X.$ La première valeur $P_{i}\_lim$ peut également être représentée par une zone de couleur variable, passant par exemple du vert à l'orange puis au rouge, sur ce cadran.

La représentation de type graphique peut également être selon une échelle verticale, les première, seconde et troisième valeurs $P_{i}\_lim, P_{i}\_X, P_{i}\_inst$ étant représentées par des repères horizontaux mobiles ou bien des bandes déroulantes de couleurs variables.

On peut afficher chaque seconde valeur $P_{i}\_X$ et chaque troisième valeur $P_{i}\_inst$ le cas échéant sur le moyen de visualisation du véhicule selon un pourcentage de la première valeur $P_{i}\_lim$ correspondant au paramètre $P_i,$ cette première valeur $P_{i}\_lim$ correspondant alors à une indication 100% sur le moyen de visualisation du véhicule. Ce type d'affichage permet de faire abstraction des valeurs numériques des première, seconde et troisième valeurs $P_{i}\_lim, P_{i}\_X, P_{i}\_inst.$ Ainsi, le pilote du véhicule peut vérifier facilement la cohérence de chaque seconde valeur $P_{i}\_X$ et chaque troisième valeur $P_{i}\_inst$ vis-à-vis de la première valeur $P_{i}\_lim.$

Cependant, les premières valeurs $P_{i}\_lim,$ les secondes valeurs $P_{i}\_X$ et les troisièmes valeurs $P_{i}\_inst$ peuvent être affichées selon un pourcentage d'une valeur de référence de ce paramètre $P_i,$ cette valeur de référence de ce paramètre $P_i$ correspondant alors à une indication 100% sur le moyen de visualisation du véhicule. Par exemple, le paramètre $P_i,$ étant le couple en sortie du moyen de transmission mécanique du véhicule, la valeur de référence du paramètre $P_i$ peut être le couple limite admissible par ce moyen de transmission mécanique du véhicule en fonctionnement continu.

De même, le paramètre $P_i$ étant la vitesse de rotation $Ng$ du générateur de gaz d'un turbomoteur du véhicule, la valeur de référence du paramètre $P_i$ peut être la vitesse de rotation maximum admissible par ce générateur de gaz en fonctionnement continu.

De plus, lorsque le véhicule est un aéronef à voilure tournante comportant un rotor principal muni de pales principales, un moyen de commande étant un moyen de commande de la variation du pas collectif des pales principales, on affiche sur le moyen de visualisation de l'aéronef les valeurs de pas collectif des pales principales correspondant respectivement à chaque première valeur $P_{i}\_lim,$ à chaque seconde valeur $P_{i}\_X$ et à chaque troisième valeur $P_{i}\_inst$ le cas échéant. Le réglage du pas collectif des pales principales étant un des éléments essentiels du pilotage d'un aéronef à voilure tournante sur lequel le pilote agit directement et en permanence, le pilote peut ainsi visualiser directement l'interaction entre les différentes valeurs liées au paramètre $P_i$ et ces valeurs du pas collectif des pales principales du rotor principal.

La correspondance entre les valeurs de pas collectifs et les valeurs $P_{i}\_lim, P_{i}\_X, P_{i}\_inst$ peut être effectuée par l'intermédiaire de la puissance au niveau du rotor principal de l'aéronef.

Par ailleurs, afin de limiter le nombre d'informations fournies au pilote du véhicule, on peut afficher des informations concernant un nombre réduit de paramètres $P_i,$ ces paramètres $P_i$ étant les plus critiques. Par exemple, on affiche chaque première valeur $P_{i}\_lim,$ chaque seconde valeur $P_{i}\_X$ et chaque troisième valeur $P_{i}\_inst$ pour le paramètre $P_i$ parmi au moins deux paramètres $P_i, P_j$ pour lequel une différence entre la première valeur $P_{i}\_lim$ et la troisième valeur $P_{i}\_inst$ associées respectivement à chaque paramètre $P_i, P_j$ est la plus faible.

On peut par exemple afficher chaque première valeur $P_{i}\_lim,$ chaque seconde valeur $P_{i}\_X$ et chaque troisième valeur $P_{i}\_inst$ le cas échéant sur un instrument de première limitation de l'aéronef, que cet affichage soit en pourcentage de la première valeur $P_{i\_}lim$ ou bien selon les valeurs de pas collectif des pales principales du rotor principal.

Un des critères déterminant dans le fonctionnement d'un véhicule est la puissance totale disponible au niveau de son installation motrice pour le fonctionnement du véhicule et son déplacement en particulier. Ainsi, afin de surveiller cette puissance totale de l'installation motrice, le paramètre $P_i$ peut être cette puissance totale fournie par l'installation motrice du véhicule. Le paramètre $P_i$ peut également être la puissance fournie par chaque moteur de cette installation motrice permettant de surveiller plus précisément la répartition de puissance entre les moteurs de l'installation motrice.

Entre outre, la puissance totale fournie par l'installation motrice ou bien la puissance fournie par un moteur de cette installation motrice est fonction de différents paramètres de cette installation motrice et/ou de chaque moteur de cette installation motrice.

Par exemple, la puissance totale instantanée $W_{inst}$ fournie par une installation motrice est sensiblement égale à la puissance instantanée fournie par un moteur, lorsque cette installation motrice ne comporte qu'un seul moteur. Cette puissance totale instantanée $W_{inst}$ est par exemple définie selon la formule $W_{inst} = C_m.N_m$, $N_m$ étant une vitesse instantanée de rotation de l'arbre de transmission du moteur et $C_m$ étant le couple moteur fourni par ce moteur sur cet arbre de transmission.

La puissance totale instantanée $W_{inst}$ fournie par l'installation motrice lorsqu'elle comporte plusieurs moteurs est sensiblement égale à la somme des puissances instantanées fournies respectivement par chaque moteur de l'installation motrice telle que $W_{inst} = \sum_n[C_m.N_m]_n$. Généralement, une installation motrice comporte des moteurs identiques et la puissance totale fournie par l'installation motrice est fournie de manière sensiblement égale par chaque moteur.

En outre, lorsque le véhicule est un aéronef à voilure tournante munie d'un rotor principal et d'un rotor anticouple, la puissance totale fournie par l'installation motrice de l'aéronef est répartie d'une part en une puissance de vol de l'aéronef pour le vol proprement dit de l'aéronef et d'autre part en une puissance accessoire pour alimenter des équipements de l'aéronef.

Cette puissance accessoire est utilisée par exemple pour alimenter la climatisation de la cabine de l'aéronef, les équipements électriques de l'aéronef tels que l'avionique ou encore les équipements hydrauliques de l'aéronef. Cette puissance accessoire, composée principalement d'une puissance électrique et d'une puissance hydraulique, peut être déterminée de façon connue.

La puissance de vol de l'aéronef est quant à elle répartie entre le rotor principal et le rotor anticouple afin d'assurer la sustentation et les déplacements de l'aéronef. Cette puissance de vol de l'aéronef est donc la somme de la puissance fournie au niveau du rotor principal et de la puissance fournie au niveau rotor anticouple.

La puissance au niveau du rotor principal peut être définie de façon connue selon la formule $W_{RP} = C_R.NR$, $NR$ étant une vitesse instantanée de rotation du rotor principal de l'aéronef et $C_R$ étant le couple rotor au niveau du mât d'entrainement en rotation du rotor principal.

La puissance instantanée au niveau du rotor anticouple peut également être déterminée de façon connue, cette puissance instantanée au niveau du rotor anticouple étant utilisée essentiellement pour s'opposer à un couple dû à la réaction du rotor principal de l'aéronef au couple moteur utilisé pour mettre en rotation ce rotor principal. Par exemple, cette puissance instantanée au niveau du rotor anticouple peut être déterminée selon la vitesse d'avancement de l'aéronef : lorsque cette vitesse d'avancement de l'aéronef est nulle, le rotor anticouple s'oppose seul à ce couple, alors que lorsque cette vitesse d'avancement de l'aéronef est non nulle, un effort aérodynamique transversal, proportionnel au carré de cette vitesse d'avancement, est généralement généré par un empennage sensiblement vertical situé à proximité du rotor arrière, permettant de réduire cette puissance instantanée au niveau du rotor anticouple.

En outre, lorsque chaque moteur de l'installation motrice est un turbomoteur comportant un générateur de gaz et une turbine libre, la puissance fournie par chaque turbomoteur est fonction du couple en sortie de ce turbomoteur, d'une température interne $T4$ des gaz à l'entrée de la turbine libre de ce turbomoteur et de la vitesse de rotation Ng du générateur de gaz de ce turbomoteur. La puissance instantanée $Wm_{inst}$ fournie par chaque moteur peut alors définie telle que $Wm_{inst} = C_m.Ng$, $C_m$ étant le couple moteur relatif au générateur de gaz.

En conséquence, le paramètre $P_i$ peut être, lorsque le véhicule est un aéronef à voilure tournante, le couple rotor $C_R$ au niveau du mât d'entrainement du rotor principal ou bien le couple moteur $C_m$ fourni par un moteur de l'installation motrice ainsi que, lorsque ce moteur est un turbomoteur, la température interne $T4$ des gaz à l'entrée de la turbine libre d'un turbomoteur ou encore la vitesse de rotation $Ng$ du générateur de gaz d'un turbomoteur. Les valeurs de ce paramètre $P_i$ peuvent alors être déterminées par exemple à partir de la puissance fournie par chaque moteur de l'installation motrice ou bien de la puissance de vol de l'aéronef.

Ainsi, afin de surveiller ce paramètre $P_i$ selon une variante du procédé de détermination de paramètres caractéristiques du fonctionnement d'un véhicule,

- on détermine une marge de puissance disponible de chaque moteur de l'installation motrice du véhicule vis-à-vis d'une puissance minimale garantie, cette marge de puissance disponible caractérisant un état de vieillissement de chaque moteur de l'installation motrice,

- on détermine une puissance instantanée $Wm_{inst}$ fournie par chaque moteur de l'installation motrice,
- on détermine une puissance maximum disponible au niveau de chaque moteur de l'installation motrice en prenant en compte la marge de puissance disponible,
- on détermine au moins une puissance caractéristique de chaque moteur de l'installation motrice correspondant à la réalisation d'une manoeuvre $X$ prédéterminée du véhicule,
- on détermine au moins une première valeur $P_{i\_}lim$ correspondant à la puissance maximum disponible pour chaque moteur,
- on détermine au moins une seconde valeur $P_{i\_}X$ correspondant à la puissance caractéristique de chaque moteur pour la réalisation d'une manoeuvre $X$ prédéterminée du véhicule,
- on détermine au moins une troisième valeur $P_{i\_}inst$ correspondant à la puissance instantanée $Wm_{inst}$ fournie par chaque moteur, et
- on affiche simultanément sur une même représentation de type graphique chaque première valeur $P_{i\_}lim$ et chaque seconde valeur $P_{i\_}X$ et chaque troisième valeur $P_{i\_}inst.$

La marge de puissance disponible de chaque moteur de l'installation motrice du véhicule est par exemple déterminée lors d'un contrôle de « santé moteur », également désigné par l'acronyme EPC pour la désignation en langue anglaise « Engine Power Check ». Un tel contrôle de santé moteur est généralement préconisé par le fabricant du moteur et doit être réalisé régulièrement, notamment lorsque le moteur est un turbomoteur. Un contrôle de santé moteur permet de vérifier l'état de fonctionnement d'un moteur et de déterminer le niveau de détérioration et/ou de vieillissement de ce moteur. Un contrôle de santé moteur permet ainsi de vérifier périodiquement les performances maximales et réelles du moteur par rapport aux performances minimum garanties.

Le contrôle de santé moteur est ainsi effectué en comparant les performances actuelles du moteur avec des performances de ce moteur obtenues sur un banc d'essais et déclarées par le fabricant. Le contrôle de santé moteur permet de déterminer une marge d'un ou plusieurs paramètres de surveillance de ce moteur par rapport à une valeur limite de chaque paramètre de surveillance et, par suite, de déterminer la marge de puissance disponible d'un moteur qui est la différence entre la puissance maximale qu'il peut fournir et sa puissance minimum garantie pour les conditions environnantes actuelles. Les conditions environnantes actuelles sont par exemple les informations relatives à l'environnement du véhicule et plus particulièrement les conditions atmosphériques. De plus, on peut déduire, grâce à ces paramètres de surveillance, si le moteur a subi des détériorations et s'il doit subir des opérations de maintenance, notamment afin de pouvoir fournir de nouveau les puissances mécaniques pour lesquelles il est adapté.

Par exemple, si ce moteur est un turbomoteur, un paramètre de surveillance peut être la température interne $T4$ des gaz à l'entrée de la turbine libre, la vitesse de rotation Ng du générateur de gaz ou bien le couple moteur $C_m$ délivré par le turbomoteur.

En outre, chaque contrôle de santé moteur doit être réalisé selon une procédure prédéterminée par le fabricant. Ce contrôle de santé moteur peut être effectué en cours de vol ou bien entre deux vols.

La puissance instantanée $Wm_{inst}$ fournie par chaque moteur de l'installation motrice peut être déterminée de façon connue, par exemple par l'intermédiaire du couple instantané délivré par le moteur. De plus, lorsque ce moteur est un turbomoteur, cette puissance instantanée peut être déterminée par l'intermédiaire de la température interne instantanée $T4$ des gaz à l'entrée de la turbine libre de ce turbomoteur ou bien de la vitesse instantanée de rotation $Ng$ de son générateur de gaz.

De même, une puissance caractéristique pour chaque moteur de l'installation motrice correspondant à la réalisation d'une manoeuvre $X$ prédéterminée du véhicule peut être déterminée. Chaque puissance caractéristique est nécessaire pour la réalisation d'une manoeuvre $X$ prédéterminée qui peut être notamment consommatrice d'une importante puissance mécanique fournie par chaque moteur.

Cette manoeuvre $X$ prédéterminée est par exemple un vol stationnaire ou bien un atterrissage dans le cas où le véhicule est un aéronef à voilure tournante.

La puissance maximum disponible au niveau de chaque moteur de l'installation motrice est déterminée en utilisant des courbes de performances du véhicule et en prenant en compte la marge de puissance disponible vis-à-vis de la puissance minimum garantie. La puissance maximum disponible est fonction des conditions environnantes actuelles et de la phase de vol du véhicule lorsque le véhicule est un aéronef.

Lorsqu'une installation motrice comporte un seul moteur, la puissance que doit fournir ce moteur pour la réalisation de la manoeuvre $X$ prédéterminée est égale à la somme de la puissance caractéristique de ce moteur et de la puissance accessoire du véhicule.

Lorsqu'une installation motrice comporte plusieurs moteurs identiques, la puissance totale que doit fournir l'installation motrice pour la réalisation de la manoeuvre $X$ prédéterminée est égale à la somme de la puissance caractéristique de chaque moteur et de la puissance accessoire du véhicule.

Cette puissance totale fournie par l'installation motrice est généralement fournie à part égale par chaque moteur. Toutefois une répartition particulière peut être définie entre chaque moteur de l'installation motrice, en particulier lorsque ces moteurs sont différents.

Comme précédemment, afin de limiter le nombre d'informations fournies au pilote du véhicule, on peut afficher chaque première valeur $P_{i\_}lim,$ chaque seconde valeur $P_{i\_}X$ et chaque troisième valeur $P_{i\_}inst$ pour le paramètre $P_i$ parmi au moins deux paramètres $P_i, P_j$ pour

lequel une différence entre la puissance instantanée et la puissance maximum disponible associées respectivement à chaque paramètre $P_i, P_j$ est la plus faible, éventuellement pour chaque moteur de l'installation motrice lorsqu'elle comporte plusieurs moteurs.

Par ailleurs, il est possible d'utiliser une masse estimée M du véhicule afin de déterminer chaque puissance caractéristique de chaque moteur de l'installation motrice pour la réalisation d'une manoeuvre X prédéterminée du véhicule. C'est notamment utile dans le cas où le véhicule est un aéronef à voilure tournante. En effet, dans ce cas, l'installation motrice de l'aéronef doit fournir une puissance suffisante afin que la portance du rotor principal s'oppose au moins à cette masse estimée M de l'aéronef. Cette masse estimée M du véhicule peut être déterminée avant le décollage de l'aéronef. Lors du vol, la masse instantanée de l'aéronef diminue suite notamment à la consommation de carburant et est alors inférieure à cette masse estimée M. Par suite, cette masse estimée M du véhicule peut être utilisée afin de déterminer chaque puissance caractéristique pour la réalisation d'une manoeuvre X prédéterminée du véhicule.

Cependant, cette puissance caractéristique est alors surévaluée par rapport à la puissance mécanique réellement nécessaire à la manoeuvre X prédéterminée de l'aéronef, la masse estimée M de l'aéronef étant supérieure à sa masse instantanée. Cette puissance caractéristique surévaluée va dans le sens de la sécurité, la puissance mécanique réellement nécessaire étant inférieure à cette puissance caractéristique surévaluée. Par contre, pour certaines manoeuvres nécessitant une importante puissance mécanique, cette puissance caractéristique surévaluée peut être supérieure à la puissance maximum disponible alors que la puissance mécanique réellement nécessaire à la manoeuvre X prédéterminée de l'aéronef est inférieure à cette puissance maximum disponible pour chaque moteur. De fait, cette manoeuvre n'est pas réalisée par le pilote qui pense à tort que l'installation motrice ne peut pas fournir une puissance totale suffisante.

De préférence, une masse instantanée estimée $M_{inst}$ du véhicule est définie et utilisée afin de déterminer plus précisément chaque puissance caractéristique pour la réalisation d'une manoeuvre X prédéterminée du véhicule. Cette masse instantanée estimée $M_{inst}$ de l'aéronef est par exemple déterminée en calculant la consommation de carburant au cours du vol, la masse de carburant consommé étant alors déduite de la masse estimée M de l'aéronef avant le décollage.

En outre, à partir de la puissance totale maximum disponible au niveau de l'installation motrice et de la masse instantanée estimée $M_{inst}$ du véhicule, on peut déterminer une masse maximale transportable par le véhicule. En effet, il est possible en utilisant les courbes de performances du véhicule et en prenant en compte la marge de puissance disponible de déterminer la masse totale du véhicule pour laquelle la puissance totale fournie par l'installation motrice est égale à la puissance totale maximum disponible. On peut ensuite en déduire la masse maximale transportable qui est la différence entre cette masse totale et la masse instantanée estimée $M_{inst}$ du véhicule.

Par ailleurs, en déterminant au moins une seconde valeur $P_{i\_}X$ et/ou une puissance caractéristique correspondant à une manoeuvre X prédéterminée, le procédé de détermination de paramètres caractéristiques du fonctionnement d'un véhicule permet d'assister le pilote du véhicule dans l'anticipation et dans l'éventuelle réalisation de cette manoeuvre X prédéterminée. Les risques liés à cette manoeuvre X prédéterminée sont alors réduits significativement, notamment pour des manoeuvres pour lesquelles le taux d'accidents est élevé, le pilote sachant par exemple s'il dispose d'une marge de puissance suffisante pour réaliser cette manoeuvre X prédéterminée. De même, la réalisation de cette manoeuvre X prédéterminée peut également être optimisée, par exemple en termes de consommation de carburant.

Il s'agit notamment du cas où le véhicule est un aéronef à voilure tournante comportant un rotor principal muni de pales principales, un rotor anticouple, le moyen de transmission mécanique de puissance étant une boîte de transmission principale de puissance entraînant le rotor principal et le rotor anticouple.

Une manoeuvre X prédéterminée est par exemple, pour un aéronef à voilure tournante, un vol en descente lente en vue d'un atterrissage au cours duquel de nombreux accidents peuvent se produire, en particulier lors des transitions entre une zone où l'aéronef est soumis à un effet de sol et une zone où l'aéronef n'est pas soumis à cet effet de sol.

En effet, à proximité du sol, le souffle du rotor principal est renvoyé par le sol sur le fuselage et les pales principales de ce rotor principal modifiant le comportement de l'aéronef. On dit alors que l'aéronef est dans l'effet de sol, défini par les acronymes DES ou bien IGE pour l'expression en langue anglaise « In Ground Effect ». Cette zone DES couvre une hauteur allant du sol à environ quatre fois le diamètre du rotor principal de l'aéronef.

Au-dessus de cette zone DES, c'est-à-dire pour une hauteur par rapport au sol supérieure à environ quatre fois le diamètre du rotor de l'aéronef, l'aéronef ne subit plus d'effet de sol. On dit alors que l'aéronef est hors effet de sol, défini par les acronymes HES ou bien OGE pour l'expression en langue anglaise « Out Ground Effect ».

Par ailleurs, lorsque l'aéronef est en vol stationnaire, c'est-à-dire que sa vitesse horizontale Vh et sa vitesse verticale Vz sont sensiblement nulles, les caractéristiques fonctionnelles de l'aéronef sont notamment définies par une série de premières courbes de performances de l'aéronef selon une première formule

$$\frac{W}{\sigma} \cdot \left(\frac{NR_0}{NR}\right)^3 = k \cdot f_1 \left[\frac{M}{\sigma} \cdot \left(\frac{NR_0}{NR}\right)^2\right].$$ Dans ce cas, W

est la puissance de vol de l'aéronef, $\sigma$ est un coefficient de réduction, $k$ est un coefficient d'influence de l'effet de sol sur le comportement de l'aéronef, $M$ est la masse estimée de l'aéronef, $NR_0$ est une vitesse de consigne de rotation du rotor principal, $NR$ est la vitesse réelle de rotation du rotor principal et $f_1$ est une première fonction représentée par une série de premières courbes de performances de l'aéronef ayant pour abscisse une première valeur $A_1 = \frac{M}{\sigma} \cdot \left(\frac{NR_0}{NR}\right)^2$ et pour ordonnée une seconde valeur $A_2 = \frac{W}{\sigma} \cdot \left(\frac{NR_0}{NR}\right)^3$. La masse estimée $M$ est de préférence la masse instantanée estimée $M_{inst}$ de l'aéronef.

Cette série de premières courbes de performances de l'aéronef selon la première fonction $f_1$ est spécifique à chaque aéronef et fournie avec le manuel de vol de l'aéronef.

Le coefficient de réduction $\sigma$ est égal au rapport $\frac{P_0}{T_0}$, $P_0$ et $T_0$ étant respectivement la pression atmosphérique et la température autour de l'aéronef. La pression atmosphérique $P_0$ est exprimée en millibar (mb) et la température $T_0$ est exprimée en kelvin (K).

Le coefficient d'influence $k$ est égal à l'unité lorsque l'aéronef est dans une zone HES. Ce coefficient d'influence $k$ varie selon la hauteur $Hz$ de l'aéronef par rapport au sol d'une valeur minimum à une valeur maximum lorsque l'aéronef est dans une zone DES. La valeur maximum est égale généralement à 1.1 pour l'ensemble des aéronefs alors que la valeur minimum, qui correspond à un aéronef au niveau du sol, varie selon l'aéronef et peut être comprise entre 0.6 et 0.9. Le coefficient d'influence $k$ est par exemple compris entre 0.6 et 1.1 pour un aéronef donné.

Ainsi, pour déterminer une première puissance caractéristique $W_k$ de l'aéronef pour la réalisation d'une manoeuvre $X$ prédéterminée dans le cas d'un vol stationnaire quelle que soit la hauteur $Hz$ de l'aéronef par rapport au sol,

- on calcule le coefficient de réduction $\sigma$ tel que $\sigma = \left(\frac{P_0}{T_0}\right)$,

- on calcule la première valeur $A_1$ telle que $A_1 = \frac{M}{\sigma} \cdot \left(\frac{NR_0}{NR}\right)^2$,

- on mesure la hauteur $Hz$ de l'aéronef par rapport au sol, à l'aide par exemple d'un radio altimètre présent dans l'aéronef,

- on détermine le coefficient d'influence $k$ correspondant à la hauteur $Hz$ de l'aéronef par rapport au sol,

- on détermine, grâce à une première courbe de performances de l'aéronef, selon la première fonction $f_1$, correspondant aux conditions de vol de l'aéronef et en fonction de la première valeur $A_1$, la seconde valeur $A_2$ telle que $A_2 = f_1\left[\frac{M}{\sigma} \cdot \left(\frac{NR_0}{NR}\right)^2\right]$ et

- on calcule à partir de la seconde valeur $A_2$ la première puissance caractéristique $W_k$ de l'aéronef pour la réalisation d'une manoeuvre $X$ prédéterminée dans le cas d'un vol stationnaire hors effet de sol ou dans l'effet de sol selon le coefficient d'influence $k$, telle que $W_k = k.A_2.\sigma.\left(\frac{NR}{NR_0}\right)^3$.

Les premières courbes de performances selon la première fonction $f_1$ sont dépendantes de l'aéronef et permettent de caractériser cet aéronef. La première courbe de performances de l'aéronef, selon la première fonction $f_1$ utilisée pour déterminer la seconde valeur $A_2$ est définie suivant les conditions de vol de l'aéronef et notamment les conditions environnantes actuelles telles que les conditions atmosphériques. Ces premières courbes de performances permettent de déterminer la puissance de vol $W$ de l'aéronef qui est la somme de la puissance nécessaire au niveau du rotor principal et la puissance nécessaire au niveau du rotor anticouple pour réaliser un vol stationnaire de l'aéronef. La puissance totale de l'installation motrice de l'aéronef pour réaliser ce vol stationnaire est alors égale à la somme de cette puissance de vol $W$ et de la puissance accessoire de l'installation motrice.

Ensuite, on peut afficher simultanément sur la représentation de type graphique la première puissance caractéristique $W_k$ et une puissance totale maximum disponible pour le vol de l'aéronef ainsi que la puissance totale instantanée consommée pour le vol de l'aéronef. La puissance totale maximum disponible pour le vol de l'aéronef et la puissance totale instantanée consommée pour le vol de l'aéronef sont respectivement égales à la puissance totale instantanée $W_{inst}$ fournie par l'installation motrice et sa puissance totale maximum disponible déduites de la puissance accessoire.

La puissance totale instantanée $W_{inst}$ fournie par l'installation motrice et sa puissance totale maximum disponible sont respectivement égales à la somme des puissances instantanées $Wm_{inst}$ fournies par chaque moteur de l'installation motrice et à la somme de leurs puissances maximum disponibles lorsque l'installation motrice comporte plusieurs moteurs.

Le pilote peut alors vérifier la différence entre la première puissance caractéristique $W_k$ de l'aéronef pour la réalisation de la manoeuvre $X$ prédéterminée et la puissance totale maximum disponible pour le vol.

De même, on peut afficher sur la représentation de type graphique une seconde valeur $P_{i\_}X$ correspondant à la première puissance caractéristique $Wk$ et une troisième valeur $P_{i\_}inst$ correspondant la puissance totale instantanée consommée pour le vol de l'aéronef ainsi qu'une première valeur $P_i\_lim$ correspondant à la puissance totale maximum disponible pour le vol de l'aéronef. Le pilote peut alors vérifier la différence entre la seconde valeur $P_i\_X$ et la première valeur $P_i\_lim.$

De plus, on peut alors réaliser un vol stationnaire de l'aéronef à cette hauteur $Hz$ de façon automatique en appliquant cette première puissance caractéristique $W_k$ à l'installation motrice en y ajoutant la puissance accessoire. Dans ce but, on peut piloter le couple moteur $C_{mk}$ de chaque moteur de l'installation motrice pour le coefficient d'influence $k$ correspondant à cette hauteur $Hz$ ou bien le pas collectif des pales principales du rotor principal de l'aéronef afin que l'installation motrice fournisse une puissance totale égale à la somme de la première puissance caractéristique $Wk$ et de la puissance accessoire.

On peut par exemple déterminer un couple moteur $C_{mk}$ que doit fournir chaque moteur de l'installation motrice correspondant à cette puissance totale, puis on applique ce couple moteur $C_{mk}$ à chaque moteur de l'installation motrice, réalisant ainsi automatiquement un vol stationnaire à la hauteur $Hz$.

On peut également déterminer, des moyens de commande de l'aéronef étant des moyens de commande de la variation du pas collectif et du pas cyclique des pales principales du rotor principal, une valeur de pas collectif de ces pales principales correspondant à cette première puissance caractéristique $Wk$, puis on applique ce pas collectif aux pales principales du rotor principal réalisant ainsi automatiquement ce vol stationnaire à la hauteur $Hz$.

Par ailleurs on peut déterminer une seconde puissance caractéristique $W_{k=1}$ d'un vol stationnaire de l'aéronef dans une zone HES. Pour cela, on définit le coefficient d'influence $k$ égal à 1, puis on calcule à partir de la seconde valeur $A_2$ une seconde puissance caractéristique $W_{k=1}$ de l'aéronef pour la réalisation d'une manoeuvre $X$ prédéterminée de l'aéronef dans le cas d'un vol stationnaire hors effet de sol de l'aéronef telle que

$$W_{k=1} = A_2.\sigma.\left(\frac{NR}{NR_0}\right)^3.$$

De même, pour déterminer une troisième puissance caractéristique $W_{kmini}$ d'un vol stationnaire de l'aéronef au niveau du sol, on définit le coefficient d'influence $k$ égal à une valeur minimale $k_{mini}$ correspondant à un vol stationnaire de l'aéronef au niveau du sol, puis on calcule à partir de la seconde valeur $A_2$ la troisième puissance caractéristique $W_{kmini}$ de l'aéronef pour la réalisation d'une manoeuvre $X$ prédéterminée de l'aéronef dans le cas d'un vol stationnaire avec effet de sol de l'aéronef au niveau du sol telle que

$$W_{kmini} = k_{mini}.A_2.\sigma.\left(\frac{NR}{NR_0}\right)^3.$$

Par suite, on peut afficher simultanément sur la représentation de type graphique la seconde puissance caractéristique $W_{k=1}$ et la troisième puissance caractéristique $W_{kmini}$ ainsi que la puissance totale maximum disponible pour le vol. Ainsi, le pilote peut vérifier, avant d'engager la manoeuvre $X$ prédéterminée, que les première et seconde puissances caractéristiques $W_{k=1}$, $W_{kmini}$ sont bien inférieures à la puissance totale maximum disponible pour le vol garantissant ainsi la réalisation d'une descente lente de l'aéronef en vue d'un atterrissage et en particulier le passage d'une zone HES à une zone DES, sans risque que la puissance totale fournie par l'installation motrice soit insuffisante.

Cette descente lente doit être réalisée sans apparition d'un effet de vortex afin de correspondre à la modélisation aérodynamique du vol de l'aéronef utilisée pour définir les premières courbes de performances de l'aéronef. Un tel effet de vortex apparait principalement lors d'un vol en descente rapide de l'aéronef lorsque le rotor principal de l'aéronef se trouve dans un flux d'air tourbillonnaire qui a lui-même généré provoquant alors une baisse brutal de sa portance.

De même, on peut afficher simultanément sur la représentation de type graphique deux secondes valeurs $P_i\_X$ correspondant respectivement à la seconde puissance caractéristique $W_{k=1}$ et à la troisième puissance caractéristique $W_{kmini}$ ainsi qu'une première valeur $P_i\_lim$ correspondant à la puissance totale maximum disponible pour le vol. Ainsi, le pilote peut vérifier avant d'engager la manoeuvre $X$ prédéterminée que les deux secondes valeurs $P_i\_X$ sont bien inférieures à la première valeur $P_i\_lim$.

De plus, le procédé de détermination de paramètres caractéristiques du fonctionnement d'un aéronef selon l'invention permet de réaliser automatiquement une descente lente de l'aéronef d'une hauteur $Hz$ de l'aéronef par rapport au sol jusqu'au sol, puis un atterrissage. Dans ce but,

- on détermine un couple total que doit fournir l'installation motrice correspondant à une puissance de descente comprise entre la troisième puissance caractéristique $W_{kmini}$ et la première puissance caractéristique $Wk$,
- on applique le couple total à l'installation motrice, réalisant ainsi automatiquement une descente de l'aéronef,
- on mesure la hauteur $Hz$ de l'aéronef par rapport au sol, et
- on ajuste le coefficient d'influence $k$, lors de la descente de l'aéronef en fonction de la réduction de la hauteur $Hz$ et par la suite la première puissance caractéristique $Wk$, et en conséquence le couple total que doit fournir l'installation motrice jusqu'à réaliser un vol en descente de l'aéronef jusqu'au niveau du sol, puis un atterrissage.

On peut également déterminer un pas collectif de ces pales principales correspondant au couple total que doit fournir l'installation motrice, puis on applique ce pas collectif aux pales principales du rotor principal réalisant ainsi automatiquement une descente lente de l'aéronef jusqu'à son atterrissage.

En outre, afin d'éviter une descente trop rapide de l'aéronef et un atterrissage brutal, voire un crash au sol, on peut appliquer un coefficient de sécurité majorant la troisième puissance caractéristique $W_{kmini}$. La valeur de ce coefficient de sécurité est de préférence proportionnelle à la différence entre la troisième puissance caractéristique $W_{kmini}$ et la première puissance caractéristique $W_k$ afin que la puissance de descente converge vers la troisième puissance caractéristique $W_{kmini}$ lors de la descente de l'aéronef.

Une manoeuvre $X$ prédéterminée peut également être, pour un aéronef à voilure tournante, un vol de croisière en palier, correspondant à une vitesse verticale $Vz$ de l'aéronef sensiblement nulle et une vitesse horizontale $Vh$ non nulle.

Au cours de ce vol de croisière, les caractéristiques fonctionnelles de l'aéronef sont définies par une série de secondes courbes de performances selon une seconde formule $W = f_2(Vh)$. Dans ce cas, $W$ est la puissance de vol de l'aéronef, $Vh$ est la vitesse horizontale de l'aéronef et $f_2$ est une seconde fonction représentée par une série de secondes courbes de performances de l'aéronef.

Cette série de secondes courbes $f_2$ de performances de l'aéronef est spécifique à chaque aéronef et fournie avec le manuel de vol de l'aéronef.

A partir de cette série de secondes courbes $f_2$, une droite horizontale tangente à la seconde courbe correspondant aux conditions de vol de l'aéronef permet de déterminer une quatrième puissance caractéristique $W_{end}$ et une première vitesse horizontale caractéristique $V_{end}$ permettant d'obtenir une consommation de carburant minimum et, par suite, une durée maximale de vol de l'aéronef.

A partir de cette série de secondes courbes $f_2$, une droite tangente à la seconde courbe correspondant aux conditions de vol de l'aéronef et passant par le point origine du repère de la seconde courbe permet de déterminer une cinquième puissance caractéristique $W_{range}$ et une seconde vitesse horizontale caractéristique $V_{range}$ permettant d'obtenir une distance franchissable maximale par l'aéronef.

Dans le cas où l'aéronef est soumis à un vent longitudinal, la vitesse de ce vent longitudinal peut être prise en compte pour déterminer cette cinquième puissance caractéristique $W_{range}$ et cette seconde vitesse caractéristique $V_{range}$. La droite tangente à la seconde courbe ne passe alors pas par le point origine du repère de la seconde courbe mais par un point décalé sur l'axe des abscisses du point origine du repère selon la valeur de cette vitesse du vent longitudinal.

On peut alors afficher simultanément sur la représentation de type graphique la quatrième puissance caractéristique $W_{end}$ et la cinquième puissance caractéristique $W_{range}$ ainsi que la puissance totale instantanée consommée pour le vol de l'aéronef et la puissance totale maximum disponible pour le vol. Le pilote peut alors adapter la puissance instantanée selon ces objectifs.

De même, on peut afficher sur la représentation de type graphique deux secondes valeurs $P_{i\_}X$ correspondant respectivement à la quatrième puissance caractéristique $W_{end}$ et à la cinquième puissance caractéristique $W_{range}$ ainsi qu'une première valeur $P_{i\_}lim$ correspondant à la puissance totale maximum disponible pour le vol et une troisième valeur $P_{i\_}inst$ correspondant à la puissance totale instantanée consommée pour le vol de l'aéronef. Le pilote peut alors vérifier la différence entre chaque seconde valeur $P_{i\_}X$ et la première valeur $P_{i\_}lim$.

Une manoeuvre $X$ prédéterminée peut également être, pour un aéronef à voilure tournante, un vol ascensionnel, correspondant alors à une vitesse verticale $Vz$ de l'aéronef non nulle. Ce vol ascensionnel est réalisé après une phase de décollage par exemple et dans une zone où l'aéronef n'est pas soumis à l'effet de sol.

Au cours de ce vol ascensionnel, les caractéristiques fonctionnelles de l'aéronef sont définies par une série de troisièmes courbes de performances selon une troisième formule $\left(\dfrac{W}{\sigma}\right)_{Vy} = f_3\left(\dfrac{M}{\sigma}\right)$. Dans ce cas, $W$ est la puissance de vol de l'aéronef, $\sigma$ est le coefficient de réduction, $M$ est la masse estimée de l'aéronef, $Vy$ est une vitesse optimale de montée de l'aéronef, $f_3$ est une troisième fonction représentée par une série de troisièmes courbes de performances de l'aéronef. Le rapport $\left(\dfrac{W}{\sigma}\right)_{Vy}$ est obtenu pour une vitesse verticale $Vz$ de l'aéronef égale à la vitesse optimale de montée $Vy$ de l'aéronef, de sorte que la puissance de vol $W$ corresponde alors à la vitesse optimale de montée $Vy$.

Cette série de troisièmes courbes $f_3$ de performances de l'aéronef est spécifique à chaque aéronef et fournie avec le manuel de vol de l'aéronef.

Ainsi, pour déterminer une sixième puissance caractéristique $W_{Vy}$ d'un vol ascensionnel de l'aéronef dans une zone HES,

- on calcule une troisième valeur $A_3$ telle que

$$A_3 = \left(\frac{M}{\sigma}\right),$$

- on détermine grâce à une troisième courbe de performances de l'aéronef, selon la troisième fonction $f_3$, correspondant aux conditions de vol de l'aéronef et en fonction de la troisième valeur $A_3$ une quatriè-me valeur $A_4$, telle que $A_4 = \left(\dfrac{W}{\sigma}\right)_{Vy}$,

- on calcule à partir de la quatrième valeur $A4$, la sixième puissance caractéristique $W_{Vy}$ correspondant à la vitesse optimale de montée $Vy$, telle que $W_{Vy} =$

$$A_4.\sigma.$$

On peut alors afficher sur la représentation de type graphique la sixième puissance caractéristique $W_{Vy}$ et la puissance totale maximum disponible pour le vol de l'aéronef ainsi que sa puissance totale instantanée consommée pour le vol. Le pilote peut alors vérifier que cette sixième puissance caractéristique $W_{Vy}$ est inférieure à la puissance totale maximum disponible pour le vol et qu'il peut réaliser ce vol ascensionnel à la vitesse optimale $Vy$.

De même, on peut afficher sur la représentation de type graphique une seconde valeur $P_i\_X$ correspondant à la sixième puissance caractéristique $W_{Vy}$ ainsi qu'une première valeur $P_i\_lim$ correspondant à la puissance totale maximum disponible pour le vol.

Par ailleurs, l'affichage des puissances totales instantanée, maximum disponible et caractéristique de l'aéronef ainsi que des valeurs $P_i\_inst, P_i\_lim, P_i\_X$ correspondant à ces puissances totales peut être remplacé par l'affichage des puissances instantanée, maximum disponibles et caractéristiques pour de chaque moteur de l'installation motrice ainsi que des valeurs $P_i\_inst, P_i\_lim, P_i\_X$ correspondant à ces puissances au niveau de ces moteurs. En effet, la répartition de la puissance totale de l'installation motrice sur chacun de ses moteurs est connue. On dispose alors d'une représentation de type graphique pour chaque moteur de l'installation motrice.

La présente invention a aussi pour objet un dispositif de détermination de paramètres caractéristiques d'un véhicule, le véhicule comportant une installation motrice munie d'au moins un moteur et d'un moyen de transmission mécanique de puissance ainsi que des moyens de commande, le dispositif comportant une pluralité de capteurs, au moins un moyen de calcul, au moins une mémoire et au moins un moyen de visualisation. Les capteurs fournissent des mesures de différentes informations relatives à l'environnement du véhicule et/ou à l'état et au fonctionnement du véhicule et de ses équipements et/ou à la position et aux déplacements du véhicule par rapport à son environnement, chaque moyen de calcul recevant les mesures des capteurs et traitant ces informations.

Le véhicule peut également comporter un radio altimètre pour déterminer une hauteur $Hz$ du véhicule par rapport au sol.

La mémoire stocke des courbes de performances du véhicule et des instructions de calcul, le moyen de calcul utilisant les instructions de calcul afin de mettre en oeuvre le procédé de détermination de paramètres caractéristiques du véhicule précédemment décrit.

L'invention et ses avantages apparaîtront avec plus de détails dans le cadre de la description qui suit avec des exemples donnés à titre illustratif en référence aux figures annexées qui représentent :

- la figure 1, un aéronef à voilure tournante muni d'un dispositif de détermination de paramètres caractéristiques du fonctionnement de l'aéronef,
- les figures 2 et 3, deux schémas synoptiques d'un procédé de détermination de paramètres caractéristiques du fonctionnement de l'aéronef,
- les figures 4 à 6, des représentations de type graphique des valeurs de chaque paramètre $P_i$, et
- les figures 8 à 10, des courbes de performances de l'aéronef.

Les éléments présents dans plusieurs figures distinctes sont affectés d'une seule et même référence.

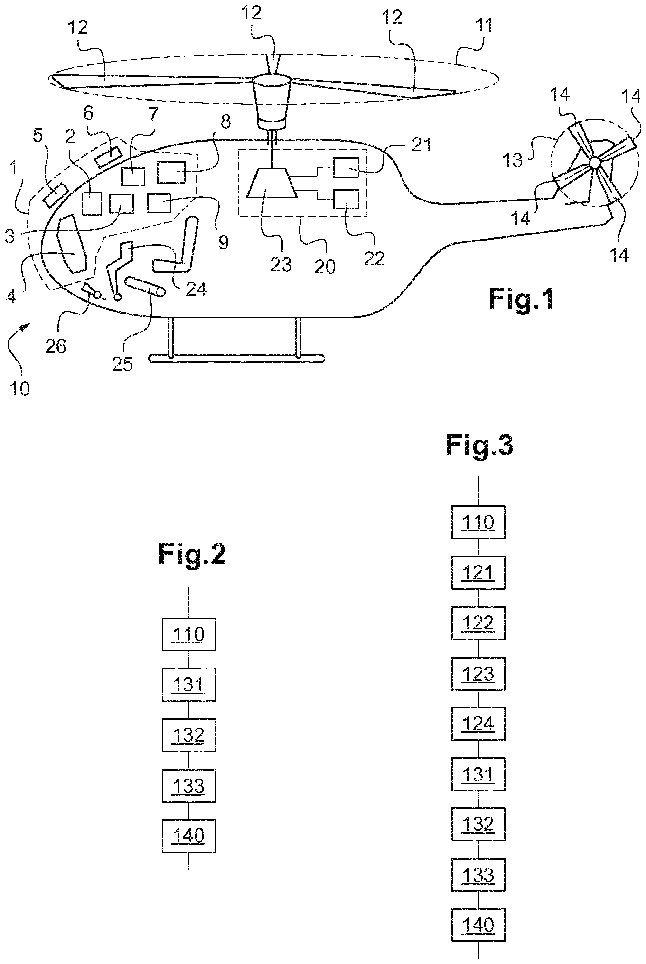

Sur la figure 1 est représenté un aéronef 10 à voilure tournante comportant un rotor principal 11 muni de pales principales 12, un rotor arrière 13 ayant notamment une fonction anticouple, ce rotor arrière 13 étant muni de pales secondaires 14. L'aéronef 10 comporte également une installation motrice 20 munie de deux turbomoteurs 21,22, une boîte de transmission principale de puissance 23 entraînant en rotation le rotor principal 11 et le rotor arrière 13 et des moyens de commande 24,25,26 composés d'un levier de pas collectif 24 et d'un manche cyclique 25 qui sont respectivement des moyens de commande de la variation du pas collectif et du pas cyclique des pales principales 12 ainsi que d'un palonnier 26 qui est un moyen de commande de la variation du pas collectif des pales secondaires 14. Ces moyens de commande 24,25,26 permettent au pilote de commander des déplacements de l'aéronef 10. Les deux turbomoteurs 21,22 sont identiques et comportent un générateur de gaz et une turbine libre. Les deux turbomoteurs 21,22 fournissent sensiblement la même puissance à la boîte de transmission principale de puissance 23 lorsque ces deux turbomoteurs 21,22 fonctionnent correctement.

Toutefois, les deux turbomoteurs 21,22 peuvent être différents et fournir alors des puissances différentes à la boîte de transmission principale de puissance 23. Une répartition particulière de ces puissances est alors définie entre ces turbomoteurs 21,22.

L'aéronef 10 comporte enfin un dispositif 1 de détermination de paramètres caractéristiques du fonctionnement de l'aéronef 10 comportant une pluralité de capteurs 5-8, un moyen de calcul 2, une mémoire 3 et au moins un moyen de visualisation 4. Ces capteurs 5-8 permettent de mesurer différentes informations relatives à l'environnement de l'aéronef 10, à l'état et au fonctionnement de l'aéronef 10 et de l'installation motrice 20, à l'état des moyens de commande 24,25,26, ainsi qu'à la position et aux déplacements de l'aéronef 10.

Les capteurs 5,6 sont par exemple un moyen de mesure de la pression atmosphérique et un moyen de mesure de la température extérieure à l'aéronef 10. Les capteurs 7,8 sont par exemple un moyen de détermination de l'attitude et du cap de l'aéronef 10 tel un dispositif AHRS pour l'expression en langue anglaise « Attitude and Heading Reference System » et un moyen de contrôle de l'installation motrice 20. Le dispositif 1 comporte également un radioaltimètre 9 déterminant la hauteur *Hz* de l'aéronef 10 par rapport au sol.

Le dispositif 1 peut mettre en oeuvre un procédé de détermination de paramètres caractéristiques du fonctionnement de l'aéronef 10 dont le schéma synoptique est représenté sur la figure 2. La mémoire 3 stocke des courbes de performances de l'aéronef 10 et des instructions de calcul et le moyen de calcul 2 utilise ces instructions de calcul afin de mettre en oeuvre ce procédé.

Le procédé selon la figure 2 comporte cinq étapes.

Au cours d'une première étape 110, on mesure différentes informations relatives à l'environnement de l'aéronef 10, et/ou à l'état et au fonctionnement de l'aéronef 10 et de l'installation motrice 20 et/ou à l'état des moyens de commande 24,25,26, et/ou à la position et aux déplacements de l'aéronef 10 par rapport à son environnement. Ces différentes informations sont notamment obtenues par l'intermédiaire des capteurs 5-8.

Au cours d'une seconde étape 131, on détermine au moins une première valeur $P_i\_lim$ correspondant à une valeur limite qu'un paramètre $P_i$ ne doit pas dépasser, $P_i$ étant un paramètre relatif à l'état ou au fonctionnement de l'aéronef 10 ou de l'installation motrice 20, ou à l'état des moyens de commande 24,25,26, ou à la position ou aux déplacements de l'aéronef 10 par rapport à son environnement.

Chaque paramètre $P_i$ peut être choisi dans la liste suivante ou bien peut être une combinaison logique ou arithmétique d'au moins deux éléments de cette liste :

- un couple total fourni par l'installation motrice 20 ou bien un couple fourni par un des turbomoteurs 21,22 ou bien un couple rotor au niveau d'un mât d'entrainement en rotation du rotor principal 11 ou bien un couple au niveau dudit rotor arrière 13,
- une puissance totale fournie par l'installation motrice 20 ou bien une puissance fournie par un des turbomoteurs 21,22
- une vitesse de l'aéronef 10 par rapport à l'air ou bien une vitesse de l'aéronef 10 par rapport au sol,
- une hauteur de l'aéronef 10 par rapport à une référence tel que le sol,
- une température à l'intérieur d'un turbomoteur 21,22 tel que la température des gaz à l'entrée de la turbine libre,
- une vitesse de rotation d'un élément d'un turbomoteur 21,22 tel que le générateur de gaz,
- une position d'une gouverne de l'aéronef 10 ou une valeur de pas des pales principales 12 du rotor principal 11 ou bien de pas des pales secondaires 14 du rotor arrière 13,
- une position des moyens de commande 24 du pas collectif des pales principales 12 du rotor principal 11,
- une position des moyens de commande 25 du pas cyclique des pales principales 12 du rotor principal 11,

- une position des moyens de commande 26 de pas collectif des pales secondaires 14 du rotor arrière 13.

Au cours d'une troisième étape 132, on détermine au moins une seconde valeur $P_i\_X$ à laquelle le paramètre $P_i$ doit être égal afin que l'aéronef 10 puisse effectuer une manoeuvre *X* prédéterminée.

Au cours d'une quatrième étape 133 optionnelle, on détermine une troisième valeur $P_i\_inst$ égale à une valeur instantanée de chaque paramètre $P_i$.

Au cours d'une cinquième étape 140, on affiche simultanément sur une même représentation de type graphique chaque première valeur $P_i\_lim$, chaque seconde valeur $P_i\_X$ et chaque troisième valeur $P_i\_inst$ le cas échéant afin de mettre clairement en évidence la position relative d'une première valeur $P_i\_lim$ vis-à-vis de chaque seconde valeur $P_i\_X$ et de chaque troisième valeur $P_i\_inst$ le cas échéant pour chaque paramètre $P_i$.

Ainsi, le pilote visualise facilement et rapidement d'une part une première marge dont il dispose entre la troisième valeur $P_i\_inst$ instantanée et la première valeur $P_i\_lim$ limite de chaque paramètre $P_i$ et d'autre part une seconde marge dont il dispose entre la seconde valeur $P_i\_X$ et la première valeur $P_i\_lim$ limite de chaque paramètre $P_i$. En conséquence, le pilote peut adapter l'utilisation de chaque paramètre $P_i$ selon la première marge et anticiper la réalisation de la manoeuvre *X* selon la seconde marge.

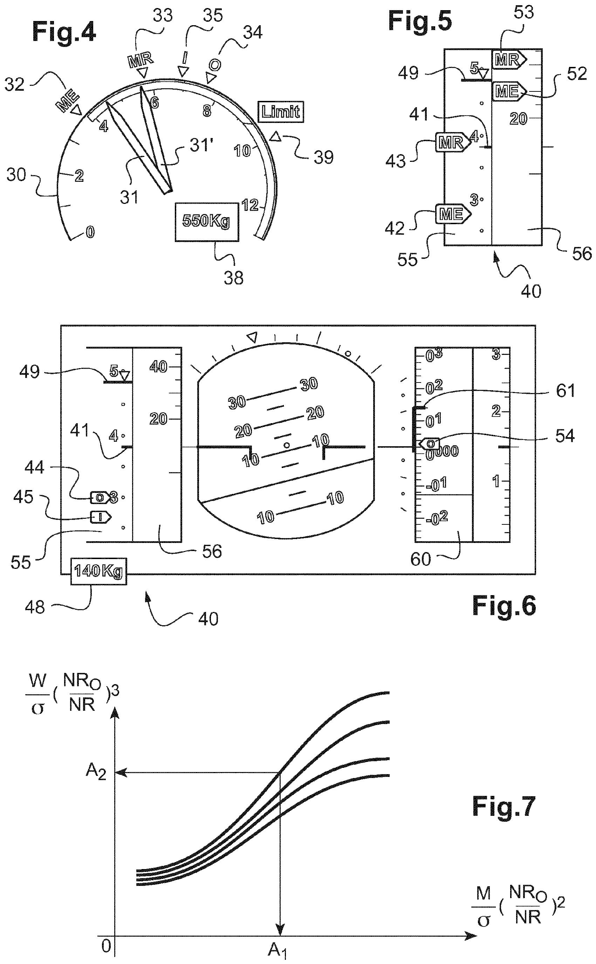

La représentation de type graphique sur le moyen de visualisation 4 peut prendre plusieurs formes telles qu'un cadran 30 de forme sensiblement circulaire représenté sur la figure 4 ou bien une échelle verticale 40 représentée sur les figures 5 et 6.

Sur la figure 4, deux aiguilles 31,31' sont mobiles en rotation sur le cadran 30 et indique respectivement la troisième valeur $P_i\_inst$ relative à chaque turbomoteur 21,22. Des repères 32,33,34,35 positionnés à l'extérieur du cadran 30 indiquent des secondes valeurs $P_i\_X$ correspondant respectivement à des manoeuvres *X* prédéterminées. La position de chaque repère 32,33,34,35 peut changer selon les conditions de vol de l'aéronef 10 et selon les conditions environnementales entourant l'aéronef 10. Chaque seconde valeur $P_i\_X$ et la troisième valeur $P_i\_inst$ sont représentées sur le cadran 30 selon un pourcentage de la première valeur $P_i\_lim$, la première valeur $P_i\_lim$ correspondant au repère 39 représentant une valeur de 100% sur le cadran 30.

Cependant, chaque première valeur $P_i\_lim$, chaque seconde valeur $P_i\_X$ et chaque troisième valeur $P_i\_inst$ peuvent être représentées sur le cadran 30 selon un pourcentage d'une valeur de référence de ce paramètre $P_i$.

Le dispositif 1 de détermination de paramètres caractéristiques du fonctionnement de l'aéronef 10 peut également comporter deux cadrans 30 muni d'une seule aiguille 31, un cadran 30 étant dédié à un seul turbomoteur 21,22.

En outre, les graduations du cadran 30 vont au-delà de 100%, car chaque première valeur $P_{i\_}lim$ correspond généralement à un fonctionnement normal et continu de l'aéronef et des turbomoteurs en particulier, mais peut être dépassée de façon transitoire par une troisième valeur $P_{i\_}inst,$ par exemple suite à une panne d'un turbomoteur. De plus, des secondes valeurs $P_{i\_}X$ peuvent dépasser chaque première valeur $P_{i\_}lim$ signifiant que la manoeuvre $X$ prédéterminée nécessite un dépassement de cette première valeur $P_{i\_}lim$ pour le paramètre $P_i$.

Sur les figures 5 et 6, une première échelle verticale 40 comporte deux sous-échelles 55,56, une première sous-échelle 55 indiquant la valeur du pas collectif des pales principales 12 du rotor principal 11 et une seconde sous-échelle 56 indiquant la vitesse d'avancement longitudinale de l'aéronef 10. Il n'y a pas dans ce cas d'indication spécifique à chaque turbomoteur 21,22 des valeurs relatives au paramètre $P_i$. La première valeur $P_{i\_}lim$ et les secondes valeurs $P_{i\_}X$ sont représentées par des repères horizontaux 49,42,43,44,45 de même que la troisième valeur $P_{i\_}inst$ représentée par un repère horizontal 41. La première valeur $P_{i\_}lim,$ chaque seconde valeur $P_{i\_}X$ et la troisième valeur $P_{i\_}inst$ sont représentées sur la sous-échelle 55 selon des valeurs de pas collectif des pales principales 12. Le pas collectif des pales principales 12 du rotor principal 11 de l'aéronef 10 étant un élément essentiel au pilote de l'aéronef à voilure tournante 10, le pilote visualise ainsi clairement et rapidement les valeurs de pas collectif des pales principales 12 correspondant respectivement à la première valeur $P_{i\_}lim,$ à chaque seconde valeur $P_{i\_}X$ et à la troisième valeur $P_{i\_}inst$ ainsi que les marges entre ces valeurs de pas collectif.

Sur la figure 5, une seconde échelle 60 indique la hauteur $Hz$ de l'aéronef 10 par rapport au sol. La valeur courante de cette hauteur $Hz$ est déterminée par l'intermédiaire du radioaltimètre 9 et affichée par le repère 61.

Le moyen de visualisation 4 est par exemple un instrument de première limitation de l'aéronef 10.

Par ailleurs, les paramètres $P_i$ représentés sur les figures 4 à 6 sont fréquemment déterminés en corrélation avec la puissance de vol de l'aéronef 10 ou bien avec la puissance de vol au niveau de chaque turbomoteur 21,22.

La puissance de vol de l'aéronef 10 est la somme de la puissance nécessaire au niveau du rotor principal 11 et de la puissance nécessaire au niveau du rotor arrière 13 afin de réaliser le vol de l'aéronef 10.

En outre, la puissance totale fournie par l'installation motrice 20 est la somme de cette puissance de vol et d'une puissance accessoire nécessaire pour alimenter les équipements de l'aéronef 10.

De plus, la puissance totale fournie par l'installation motrice 20 est sensiblement égale à la somme des puissances fournies respectivement par chaque turbomoteur 21,22 de l'installation motrice 20, cette puissance totale étant fournie de manière sensiblement égale par chaque turbomoteur 21,22 lorsque ces deux turbomoteurs 21,22 identiques fonctionnent correctement.

Par suite, la puissance de vol de l'aéronef 10 est égale à la puissance totale fournie par l'installation motrice 20 déduite de la puissance accessoire. De même, la puissance de vol au niveau de chaque turbomoteur 21,22 est égale à la moitié de cette puissance de vol de l'aéronef 10.

Le procédé de détermination de paramètres caractéristiques du fonctionnement peut alors comporter des sous-étapes intermédiaires entre la première et la seconde étapes 110,131. Un schéma synoptique d'un tel procédé, comportant alors neuf étapes et sous-étapes, est représenté sur la figure 3.

Au cours d'une première sous-étape 121, on détermine une marge de puissance disponible de chaque turbomoteur 21,22 vis-à-vis d'une puissance minimale garantie, la marge de puissance disponible caractérisant un état de vieillissement de chaque turbomoteur 21,22.

Au cours d'une seconde sous-étape 122, on détermine une puissance instantanée $Wm_{inst}$ fournie par chaque turbomoteur 21,22.

Au cours d'une troisième sous-étape 123, on détermine une puissance maximum disponible au niveau de chaque turbomoteur 21,22 en prenant en compte la marge de puissance disponible.

Au cours d'une quatrième sous-étape 124, on détermine au moins une puissance caractéristique de chaque turbomoteur 21,22 correspondant à une manoeuvre $X$ prédéterminée de l'aéronef 10.

Puis, au cours de la seconde étape 131, on détermine deux premières valeurs $P_{i\_}lim$ correspondant respectivement à la puissance maximum disponible de chaque turbomoteur 21,22.

Au cours de la troisième étape 132, on détermine deux secondes valeurs $P_{i\_}X$ correspondant à une puissance caractéristique pour chaque turbomoteur 21,22 pour réaliser la manoeuvre $X$ prédéterminée de l'aéronef 10.

Au cours de la quatrième étape 133, on détermine deux troisièmes valeurs $P_{i\_}inst$ correspondant respectivement à la puissance instantanée $Wm_{inst}$ fournie par chaque turbomoteur 21,22.

Enfin, au cours de la cinquième étape 140, on affiche simultanément sur la même représentation de type graphique la première valeur $P_{i\_}lim,$ chaque seconde valeur $P_{i\_}X$ et la troisième valeur $P_{i\_}inst$ pour chaque turbomoteur 21,22.

Le paramètre $P_i$ est dans ce cas relatif au fonctionnement d'un turbomoteur, tel que le couple moteur $C_m$ fourni par un turbomoteur 21,22, la température interne $T4$ des gaz à l'entrée de la turbine libre d'un turbomoteur 21,22 ou encore la vitesse de rotation Ng du générateur de gaz d'un turbomoteur 21,22.

De plus, afin de limiter le nombre de paramètres $P_i$ que le pilote doit surveiller, seul le paramètre $P_i$ le plus critique est affiché sur le moyen de visualisation 4. Ce paramètre $P_i$ le plus critique pour le pilotage de l'aéronef 10 est celui pour lequel la différence entre la troisième

valeur $P_{i\_inst}$ et la première valeur $P_{i\_lim}$ est la plus faible. Ainsi, le pilote peut visualiser clairement et rapidement la marge dont il dispose actuellement sur les conditions courantes de vol ainsi que pour la manoeuvre $X$ prédéterminée qu'il envisage de réaliser.

La marge de puissance disponible de chaque turbomoteur 21,22 de l'installation motrice 20 peut être déterminée lors d'un contrôle de « santé moteur », qui doit être réalisé régulièrement.

La puissance instantanée $Wm_{inst}$ fournie par chaque turbomoteur 21,22 peut être définie selon la formule $Wm_{inst} = C_m.Ng$, $C_m$ étant le couple moteur fourni par la turbomoteur 21,22 et $Ng$ étant la vitesse de rotation du générateur de gaz de ce turbomoteur 21,22.

La puissance instantanée $Wm_{inst}$ fournie par chaque turbomoteur 21,22 peut également être déterminée à partir de la puissance de vol de l'aéronef 10. La puissance au niveau du rotor principal 11 est connue selon la formule $W_{inst} = C_R.NR$, $NR$ étant la vitesse instantanée de rotation du rotor principal 11 et $C_R$ étant un couple rotor au niveau d'un mât d'entrainement du rotor principal 11. De même, la puissance au niveau du rotor arrière 13 ainsi que la puissance accessoire peuvent également être déterminée de façon connue. Enfin, cette puissance totale instantanée $W_{inst}$ fournie par l'installation motrice est répartie de manière égale par chaque turbomoteur 21,22 lorsque ces deux turbomoteurs 21,22 fonctionnent correctement.

La puissance caractéristique de chaque turbomoteur 21,22 est ensuite déterminée selon la manoeuvre $X$ prédéterminée qu'envisage de réaliser le pilote de l'aéronef 10. Cette manoeuvre $X$ prédéterminée peut être par exemple un vol stationnaire, un atterrissage ou bien un vol de croisière.

Lorsque l'aéronef 10 est en vol stationnaire, les caractéristiques fonctionnelles de l'aéronef 10 sont caractérisées par une série de premières courbes de performances représentées sur la figure 7. Ces premières courbes de performances sont définies par la première formule $\frac{W}{\sigma}.\left(\frac{NR_0}{NR}\right)^3 = k.f_1\left[\frac{M}{\sigma}.\left(\frac{NR_0}{NR}\right)^2\right]$, $W$ étant la puissance de vol de l'aéronef 10, $\sigma$ étant un coefficient de réduction, $k$ étant un coefficient d'influence du sol sur le comportement de l'aéronef 10 en fonction de la hauteur $Hz$ de l'aéronef 10 par rapport au sol, $M$ étant la masse estimée de l'aéronef 10, $NR_0$ étant une vitesse de consigne de rotation du rotor principal 11, $NR$ étant la vitesse réelle de rotation du rotor principal 11 et $f_1$ étant une première fonction représentée par une série de premières courbes de performances de l'aéronef 10. Sur la figure 7, les abscisses de ces premières courbes de performances correspondent à la première valeur $A_1 = \frac{M}{\sigma}.\left(\frac{NR_0}{NR}\right)^2$ et leurs ordonnées à la seconde valeur $A_2 = \frac{W}{\sigma}.\left(\frac{NR_0}{NR}\right)^3$.

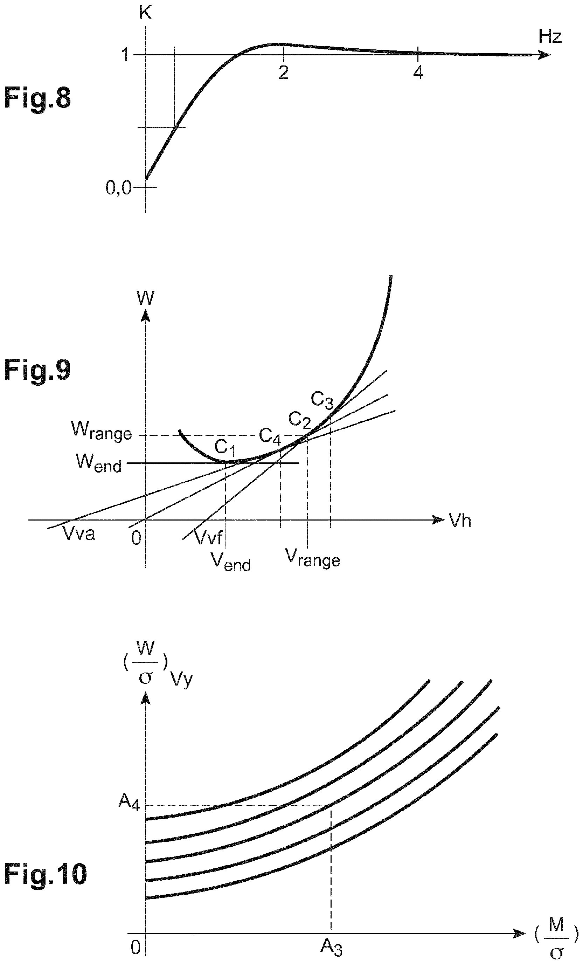

Le coefficient d'influence $k$ est spécifique à chaque aéronef 10 et défini par une courbe d'influence du sol représentée sur la figure 8 ayant pour abscisse la hauteur $Hz$ de l'aéronef 10 par rapport au sol et pour ordonnée ce coefficient d'influence $k$. Sur la courbe représentée sur la figure 8, ce coefficient d'influence $k$ est compris entre 0.9 et 1.1.

Afin de déterminer la puissance caractéristique de vol de l'aéronef 10 pour un vol stationnaire, on calcule tout d'abord le coefficient de réduction $\sigma$ tel que $\sigma = \left(\frac{P_0}{T_0}\right)$, puis la première valeur $A_1$ telle que $A_1 = \frac{M}{\sigma}.\left(\frac{NR_0}{NR}\right)^2$. La masse $M$ peut être une masse estimée de l'aéronef 10 déterminée avant son décollage ou bien de préférence une masse instantanée estimée $M_{inst}$ de l'aéronef 10.

Puis, on mesure la hauteur $Hz$ de l'aéronef 10 par rapport au sol, par l'intermédiaire par exemple du radioaltimètre 9 de l'aéronef 10 et on détermine le coefficient d'influence $k$ correspondant à la hauteur $Hz$, à l'aide de la courbe d'influence du sol de la figure 8.

Ensuite, on détermine, grâce à une première courbe de performances de l'aéronef 10 selon la première fonction $f_1$ correspondant aux conditions de vol de l'aéronef et en fonction de la première valeur $A_1$, une seconde valeur $A_2$ telle que $A_2 = f_1\left[\frac{M}{\sigma}.\left(\frac{NR_0}{NR}\right)^2\right]$ comme indiqué sur la figure 7.

Enfin, on calcule à partir de la seconde valeur $A_2$ une première puissance caractéristique $W_k$ de l'aéronef 10 dans le cas d'un vol stationnaire hors effet de sol ou dans l'effet de sol en fonction de la hauteur $Hz$ de l'aéronef 10 par rapport au sol et selon le coefficient d'influence $k$, telle que $W_k = k.A_2.\sigma.\left(\frac{NR}{NR_0}\right)^3$. La puissance caractéristique de chaque turbomoteur 21,22 dans le cas d'un vol stationnaire hors effet de sol ou dans l'effet de sol est alors égale à la moitié de cette première puissance caractéristique $W_k$ de l'installation motrice.

Afin de déterminer une seconde puissance caractéristique $W_{k=1}$ de l'aéronef 10 lors d'un vol stationnaire hors effet de sol, on définit le coefficient d'influence k égal à 1 et on calcule à partir de la seconde valeur $A_2$ la seconde puissance caractéristique $W_{k=1}$ telle que

$$W_{k=1} = A_2.\sigma.\left(\frac{NR}{NR_0}\right)^3.$$

Afin de déterminer une troisième puissance caractéristique $W_{kmini}$ de de l'aéronef 10 lors d'un vol stationnaire au niveau du sol, on définit le coefficient d'influence k minimum, tel que $k_{mini} = 0.9$ selon la courbe d'influence du sol de la figure 8 et on calcule à partir de la seconde valeur $A_2$ la troisième puissance caractéristique $W_{kmini}$ telle que

$$W_{kmini} = (0.9).A_2.\sigma.\left(\frac{NR}{NR_0}\right)^3.$$

On peut ensuite déterminer les secondes valeurs $P_{i\_X}$ correspondant respectivement à la seconde puissance caractéristique $W_{k=1}$ et à la troisième puissance caractéristique $W_{kmini}$, puis les afficher sur le moyen de visualisation 4 par l'intermédiaire des repères 34 et 35 du cadran 30 sur la figure 4 et des repères 44 et 45 de l'échelle 55 sur la figure 5. De plus, sur l'échelle 60 de la figure 5, un repère 61 indique la hauteur $Hz_k$ la plus basse correspond au coefficient $k$ égal à 1. Cette hauteur $Hz_k$ la plus basse est définie par la courbe représentée sur la figure 8, fournissant la variation du coefficient $k$ selon la hauteur $Hz$. Ainsi, le pilote de l'aéronef 10 visualise la hauteur $Hz_k$ qu'il atteindra s'il modifie progressivement la valeur courante de pas collectif jusqu'au repère 44 correspondant à la seconde valeur $P_{i\_X}$ qui correspond à la seconde puissance caractéristique $W_{k=1}$. Par contre, cette modification de la valeur du pas collectif doit être progressive afin de limiter les effets dynamiques et d'inertie de cette descente de l'aéronef 10.

L'aéronef 10 peut également réaliser de façon automatique une descente lente vers un atterrissage suite au calcul de la première puissance caractéristique $W_k$ et de la troisième puissance caractéristique $W_{kmini}$.

Dans ce but, on détermine le couple que doit fournir chaque turbomoteur 21,22 correspondant à une puissance de descente comprise entre la troisième puissance caractéristique $W_{kmini}$ et la première puissance caractéristique $W_k$, en prenant en compte la puissance accessoire et éventuellement un coefficient de sécurité, puis on applique ce couple à chaque turbomoteur 21,22. On ajuste ensuite le coefficient d'influence $k$ lors de la descente de l'aéronef 10 en fonction de la réduction de la hauteur $Hz$ et par la suite la première puissance caractéristique $W_k$, et en conséquence le couple que doit fournir chaque turbomoteur 21,22 jusqu'à l'atterrissage de l'aéronef 10.

On peut également déterminer le pas collectif des pales principales 12 du rotor principal 11 correspondant à cette puissance de descente comprise entre la troisième puissance caractéristique $W_{kmini}$ et la première puissance caractéristique $W_k$. On applique le pas collectif aux pales principales 12 du rotor principal 11, via par exemple un pilote automatique de l'aéronef 10, réalisant ainsi automatiquement une descente lente vers un atterrissage de l'aéronef 10. La valeur de ce pas collectif est ensuite ajustée suite à la descente de l'aéronef 10 et la variation du coefficient d'influence $k$ est ajustée en fonction de la réduction de la hauteur $Hz$.

De plus, à partir de la puissance totale maximum disponible au niveau de l'installation motrice 20 et grâce aux premières courbes de performances selon la première fonction $f_1$ représentées sur figure 7, il est possible de déterminer la masse maximale transportable par l'aéronef 10. En effet, la masse maximale transportable est la différence entre la masse de l'aéronef 10 pour laquelle la puissance totale fournie par l'installation motrice 20 est égale à cette puissance totale maximum disponible, en prenant en compte la marge de puissance disponible et la masse instantanée estimée $M_{inst}$ de l'aéronef 10. Cette masse maximale transportable peut alors être indiquée au pilote de l'aéronef 10 sur le moyen de visualisation 4 par l'intermédiaire d'une indication visuelle 38,48.

Lorsque l'aéronef 10 est en vol de croisière, les caractéristiques fonctionnelles de l'aéronef 10 sont caractérisées par une série de secondes courbes de performances représentées sur la figure 9. Ces secondes courbes de performances sont définies par une seconde formule $W = f_2(Vh)$, $Vh$ étant la vitesse horizontale de l'aéronef 10 et $f_2$ étant une seconde fonction représentée par une série de secondes courbes de performances de l'aéronef 10. Sur la figure 9, les abscisses de ces secondes courbes de performances sont constituées par la vitesse horizontale $Vh$ de l'aéronef 10 et leurs ordonnées par la puissance de vol $W$ de l'aéronef 10.

Ces secondes courbes de performances $f_2$ passent par une puissance minimale consommée par l'installation motrice 20 qui est une quatrième puissance caractéristique $W_{end}$ permettant d'obtenir une consommation minimale pour l'installation motrice 20 et une durée maximale de vol de l'aéronef 10 dans les conditions de ce vol de croisière. Un premier point caractéristique $C_1$ de cette quatrième puissance caractéristique $W_{end}$ est déterminé sur la figue 9 par le point de tangence entre une droite horizontale et la seconde courbe de performances qui correspond aux conditions de vol de l'aéronef 10. La première vitesse horizontale caractéristique $V_{end}$ correspondant à cette quatrième puissance caractéristique $W_{end}$ est également définie par ce premier point caractéristique $C_1$.

A partir de ces secondes courbes de performances $f_2$, une cinquième puissance caractéristique $W_{range}$ et une seconde vitesse horizontale caractéristique $V_{range}$ correspondant au meilleur compromis entre la vitesse d'avancement de l'aéronef et sa puissance consommée permettant d'obtenir une distance franchissable maximale par l'aéronef 10 dans les conditions de ce vol de croisière peuvent être déterminées. Un second point caractéristique $C_2$ de cette cinquième puissance caractéristique $W_{range}$ est déterminé sur la figue 9 par l'intersection entre la seconde courbe de performances qui correspond aux conditions de vol de l'aéronef 10 et une droite tangente à cette seconde courbe et passant par le point origine du repère de cette figure 9. La seconde vitesse horizontale caractéristique $V_{range}$ correspondant à cette cinquième puissance caractéristique $W_{range}$ est également définie par ce second point caractéristique $C_2$.

En cas de vent longitudinal subi par l'aéronef 10, cette droite tangente à la seconde courbe ne passe pas par le point origine du repère de la figure 9, mais par un point décalé sur l'axe des abscisses du point origine du repère selon la valeur de la vitesse du vent longitudinal. Ainsi, en cas de vent de face subi par l'aéronef 10, la cinquième puissance caractéristique $W_{range}$ et la seconde vitesse horizontale caractéristique $V_{range}$ sont définies par le troisième point caractéristique $C_3$ de la figure 9, la vitesse du vent de face $Vvf$ étant positive. De même, en cas de vent arrière subi par l'aéronef 10, la cinquième puissance caractéristique $W_{range}$ et la seconde vitesse horizontale caractéristique $V_{range}$ sont définies par le quatrième point caractéristique $C_4$ de la figure 9, la vitesse du vent arrière $Vva$ étant négative.

On peut ensuite déterminer les secondes valeurs $P_i\_X$ correspondant respectivement à la quatrième puissance caractéristique $W_{end}$ et à la cinquième puissance caractéristique $W_{range}$, puis les afficher sur le moyen de visualisation 4 par l'intermédiaire des repères 32 et 33 sur la figure 4 et des repères 42 et 43 sur la figure 6. Comme indiqué sur la figure 6, on peut également afficher sur la seconde sous-échelle 56 indiquant la vitesse d'avancement longitudinale de l'aéronef 10, la première vitesse horizontale caractéristique $V_{end}$ et la seconde vitesse horizontale caractéristique $V_{range}$.

Lorsque l'aéronef 10 est en vol ascensionnel, des caractéristiques fonctionnelles de l'aéronef 10 sont caractérisées par une série de troisièmes courbes de performances représentées sur la figure 10. Ces troisièmes courbes de performances sont définies par une troisième formule $\left(\frac{W}{\sigma}\right)_{Vy} = f_3\left(\frac{M}{\sigma}\right)$, $W$ étant la puissance de vol de l'aéronef 10, $Vy$ étant la vitesse optimale de montée de l'aéronef 10 et $f_3$ étant une troisième fonction représentée par une série de troisièmes courbes de performances de l'aéronef 10. Le rapport $\left(\frac{W}{\sigma}\right)_{Vy}$ est ainsi obtenu pour une vitesse verticale $Vz$ de l'aéronef égale à la vitesse optimale de montée $Vy$ et permet de déterminer une sixième puissance caractéristique $W_{Vy}$ correspondant à un vol ascensionnel de l'aéronef 10 à la vitesse optimale de montée $Vy$.

On calcule une troisième valeur $A_3$ telle que $A_3 = \left(\frac{M}{\sigma}\right)$ connaissant la masse $M$ de l'aéronef 10 et le coefficient de réduction $\sigma$. On détermine ensuite grâce à une troisième courbe de performances de l'aéronef 10 correspondant aux conditions de vol de l'aéronef selon la troisième fonction $f_3$ et en fonction de la troisième valeur $A_3$ une quatrième valeur $A_4$, telle que $A_4 = f_3\left(\frac{M}{\sigma}\right)$. Puis, on calcule à partir de la quatrième valeur $A_4$, la sixième puissance caractéristique $W_{Vy}$ correspondant à la vitesse optimale de montée $Vy$, telle que $W_{Vy} = A_4.\sigma$.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications annexées.

**Revendications**

1. Procédé de détermination de paramètres caractéristiques du fonctionnement d'un véhicule (10), ledit véhicule (10) comportant une installation motrice (20) munie d'au moins un moteur (21,22) et d'un moyen de transmission mécanique de puissance (23), des moyens de commande (24,25,26) des déplacements dudit véhicule (10), une pluralité de capteurs (5-8), au moins un moyen de calcul (2), au moins une mémoire (3) et au moins un moyen de visualisation (4),
au cours duquel

   - on mesure différentes informations relatives à l'environnement dudit véhicule (10), et/ou à l'état et au fonctionnement dudit véhicule (10) et de ladite installation motrice (20) et/ou à l'état desdits moyens de commande (24,25,26), et/ou à la position et aux déplacements dudit véhicule (10) par rapport à son environnement,
   - on détermine une marge de puissance disponible de chaque moteur (21,22) de ladite installation motrice (20) vis-à-vis d'une puissance minimale garantie, ladite marge de puissance disponible caractérisant un état de vieillissement de chaque moteur (21,22) de ladite installation motrice (20),
   - on détermine une puissance maximum disponible au niveau de chaque moteur (21,22) de ladite installation motrice (20) en prenant en compte ladite marge de puissance disponible,
   - on détermine au moins une puissance caractéristique de chaque moteur (21,22) de ladite installation motrice (20) correspondant à la réalisation d'une manoeuvre $X$ prédéterminée dudit véhicule (10),
   - on détermine au moins une première valeur $P_i\_lim$ correspondant à ladite puissance maximum disponible de chaque moteur (21,22) de ladite installation motrice (20), et à une valeur limite qu'un paramètre $P_i$ ne doit pas dépasser, $P_i$ étant un paramètre relatif à l'état ou au fonctionnement dudit véhicule (10), ou à l'état ou au fonctionnement de ladite installation motrice (20) ou à l'état desdits moyens de commande (24,25,26) ou à la position ou aux déplacements dudit véhicule (10) par rapport à son environnement,

- on détermine au moins une seconde valeur $P_{i\_}X$ correspondant à une puissance caractéristique de chaque moteur (21,22) pour la réalisation d'une manoeuvre X prédéterminée dudit véhicule (10) et à laquelle ledit paramètre $P_i$ doit être égal afin que ledit véhicule (10) puisse effectuer ladite manoeuvre X prédéterminée, et
- on affiche simultanément sur une même représentation de type graphique chaque première valeur $P_{i\_}lim$ et chaque seconde valeur $P_{i\_}X$ afin de mettre clairement en évidence la position relative d'une première valeur $P_{i\_}lim$ vis-à-vis de chaque seconde valeur $P_{i\_}X$ pour chaque paramètre $P_i$.

2. Procédé selon la revendication 1, **caractérisé en ce que** :

- on détermine une puissance instantanée $Wm_{inst}$ fournie par chaque moteur (21,22) de ladite installation motrice (20),
- on détermine au moins une troisième valeur $P_{i\_}inst$ correspondant à ladite puissance instantanée $Wm_{inst}$ fournie par chaque moteur (21,22) et égale à une valeur instantanée de chaque paramètre $P_i$ et
- on affiche sur ladite représentation de type graphique chaque troisième valeur $P_{i\_}inst$.

3. Procédé selon l'une quelconque des revendications 1 à 2, **caractérisé en ce que** l'on affiche chaque seconde valeur $P_{i\_}X$ et chaque troisième valeur $P_{i\_}inst$ le cas échéant sur ledit moyen de visualisation (4) selon un pourcentage vis-à-vis de ladite première valeur $P_{i\_}lim$ correspondant audit paramètre $P_i$.

4. Procédé selon l'une quelconque des revendications 1 à 2, **caractérisé en ce que** l'on affiche chaque première valeur $P_{i\_}lim$, chaque seconde valeur $P_{i\_}X$ et chaque troisième valeur $P_{i\_}inst$ le cas échéant sur ledit moyen de visualisation (4) selon un pourcentage vis-à-vis d'une valeur de référence dudit paramètre $P_i$.

5. Procédé selon l'une quelconque des revendications 1 à 2, **caractérisé en ce que**, ledit véhicule (10) étant un aéronef à voilure tournante comportant un rotor principal (11) muni de pales principales (12), un moyen de commande (24,25,26) étant un moyen de commande de la variation du pas collectif desdites pales principales (12), on affiche des valeurs de pas collectif des pales principales (12) correspondant respectivement à chaque première valeur $P_{i\_}lim$, à chaque seconde valeur $P_{i\_}X$ et à chaque troisième valeur $P_{i\_}inst$ le cas échéant sur ledit moyen de visualisation (4).

6. Procédé selon l'une quelconque des revendications 2 à 5, **caractérisé en ce que** l'on affiche chaque première valeur $P_{i\_}lim$, chaque seconde valeur $P_{i\_}X$ et chaque troisième valeur $P_{i\_}inst$ sur un Instrument de Première Limitation IPL dudit véhicule (10).

7. Procédé selon l'une quelconque des revendications 1 à 6, **caractérisé en ce que** l'on détermine une masse instantanée estimée $M_{inst}$ dudit véhicule (10) afin de déterminer chaque puissance caractéristique.

8. Procédé selon la revendication 7, **caractérisé en ce que** l'on détermine, à partir d'une puissance totale maximum disponible au niveau de ladite installation motrice (20) égale à la somme desdites puissances maximum disponibles au niveau de chaque moteur (21,22), une masse maximale transportable par ledit véhicule (10), ladite masse maximale transportable étant la différence entre la masse dudit véhicule (10) pour laquelle une puissance totale fournie par ladite installation motrice (20) est égale à ladite puissance totale maximum disponible selon des courbes de performances dudit véhicule (10) en prenant en compte ladite marge de puissance disponible et ladite masse instantanée estimée $M_{inst}$ dudit véhicule (10).

9. Procédé selon l'une quelconque des revendications 1 à 7, **caractérisé en ce que**, ledit véhicule (10) étant un aéronef à voilure tournante comportant un rotor principal (11) muni de pales principales (12), un rotor anticouple (13) muni de pales secondaires (14), ledit moyen de transmission mécanique de puissance (23) étant une boîte de transmission principale de puissance entraînant en rotation ledit rotor principal (11) et ledit rotor anticouple (13), lorsque ledit aéronef (10) est en vol stationnaire, sa vitesse horizontale Vh et sa vitesse verticale Vz étant sensiblement nulles, les caractéristiques fonctionnelles dudit aéronef (10) étant notamment **caractérisées par** une série de premières courbes de performances selon une première formule

$$\frac{W}{\sigma} \cdot \left(\frac{NR_0}{NR}\right)^3 = k \cdot f_1 \left[\frac{M}{\sigma} \cdot \left(\frac{NR_0}{NR}\right)^2\right],$$ $W$ étant une puissance de vol dudit aéronef (10), $\sigma$ étant un coefficient de réduction, $k$ étant un coefficient d'influence du sol sur le comportement dudit aéronef (10) en fonction de la hauteur $Hz$ dudit aéronef (10) par rapport audit sol, $M$ étant ladite masse estimée dudit

aéronef (10), $NR_0$ étant une vitesse de consigne de rotation dudit rotor principal (11), $NR$ étant la vitesse réelle de rotation dudit rotor principal (11) et $f_1$ étant une première fonction représentée par une série de premières courbes de performances dudit aéronef (10), ladite puissance de vol $W$ dudit aéronef (10) étant égale à la somme desdites puissances fournies par chaque moteur (21,22) de ladite installation motrice (20) déduite d'une puissance accessoire nécessaire pour alimenter des équipements dudit aéronef (10),

- on calcule ledit coefficient de réduction $\sigma$ tel que $\sigma = \left(\dfrac{P_0}{T_0}\right)$,

- on calcule une première valeur $A_1$ telle que

$$A_1 = \frac{M}{\sigma}.\left(\frac{NR_0}{NR}\right)^2,$$

- on mesure ladite hauteur $Hz$ dudit aéronef (10) par rapport audit sol,
- on détermine ledit coefficient d'influence $k$ correspondant à ladite hauteur $Hz$,
- on détermine, grâce à une première courbe de performances dudit aéronef (10) selon la première fonction $f_1$ correspondant aux conditions de vol dudit aéronef (10) et en fonction de ladite première valeur $A_1$, une seconde valeur $A_2$ telle

que $A_2 = f_1\left[\dfrac{M}{\sigma}.\left(\dfrac{NR_0}{NR}\right)^2\right]$,

- on calcule à partir de ladite seconde valeur $A_2$ une première puissance caractéristique $W_k$ dudit aéronef (10) dans le cas d'un vol stationnaire hors effet de sol ou dans l'effet de sol selon ledit coefficient d'influence $k$, telle que

$$W_k = k.A_2.\sigma.\left(\frac{NR}{NR_0}\right)^3.$$

10. Procédé selon la revendication 9, **caractérisé en ce que**

- on définit ledit coefficient d'influence $k$ égal à 1 correspondant à un vol stationnaire hors effet de sol dudit aéronef (10) et on calcule à partir de ladite seconde valeur $A_2$ une seconde puissance caractéristique $W_{k=1}$ dudit aéronef (10) dans le cas d'un vol stationnaire hors effet de sol dudit aéronef (10) telle que

$$W_{k=1} = A_2.\sigma.\left(\frac{NR}{NR_0}\right)^3.$$

11. Procédé selon la revendication 10,

**caractérisé en ce que** l'on affiche, sur une échelle (60) représentant la hauteur $Hz$ de l'aéronef (10) par rapport au sol, un repère 61 indiquant la hauteur $Hz_k$ la plus basse correspond au coefficient $k$ égal à 1.

12. Procédé selon la revendication 9, **caractérisé en ce que**

- on définit ledit coefficient d'influence $k$ égal à une valeur minimale $k_{mini}$ correspondant à un vol stationnaire dudit aéronef (10) au niveau du sol et
- on calcule à partir de ladite seconde valeur $A_2$ ladite troisième puissance caractéristique $W_{kmini}$ dudit aéronef (10) dans le cas d'un vol stationnaire dudit aéronef (10) au niveau du sol

telle que $W_{kmini} = k_{mini}.A_2.\sigma.\left(\dfrac{NR}{NR_0}\right)^3.$

13. Procédé selon la revendication 9, **caractérisé en ce que**

- on définit ledit coefficient d'influence $k$ égal à une valeur minimale $k_{mini}$ correspondant à un vol stationnaire dudit aéronef (10) au niveau du sol,
- on calcule à partir de ladite seconde valeur $A_2$ une troisième puissance caractéristique $W_{kmini}$ dudit aéronef (10) dans le cas d'un vol stationnaire au niveau du sol telle que

$$W_{kmini} = k_{mini}.A_2.\sigma.\left(\frac{NR}{NR_0}\right)^3,$$

- on détermine un couple total que doit fournir ladite installation motrice (20) correspondant à une puissance de ladite installation motrice (20) comprise entre ladite troisième puissance caractéristique $W_{kmini}$ et ladite première puissance caractéristique $W_k$,
- on applique ledit couple total à ladite installation motrice (20), réalisant ainsi automatiquement une descente lente vers un atterrissage,
- on ajuste ledit coefficient d'influence $k$, lors de la descente de l'aéronef (10) en fonction de la réduction de ladite hauteur $Hz$ et par la suite ladite première puissance caractéristique $W_k$, et en conséquence ledit couple total que doit fournir ladite installation motrice (20) jusqu'à l'atterrissage dudit aéronef (10).

14. Procédé selon la revendication 9, **caractérisé en ce que**, des moyens de commande (24,25,26) étant des moyens de commande de la variation du pas collectif et du pas cyclique desdites pales principales (12),

- on définit ledit coefficient d'influence $k$ égal à une valeur minimale $k_{mini}$ correspondant à un vol stationnaire dudit aéronef (10) au niveau du sol,
- on calcule à partir de ladite seconde valeur $A_2$ une troisième puissance caractéristique $W_{kmini}$ dudit aéronef (10) dans le cas d'un vol stationnaire niveau du sol telle que

$$W_{kmini} = k_{mini}.A_2.\sigma.\left(\frac{NR}{NR_0}\right)^3,$$

- on détermine un pas collectif desdites pales principales (12) correspondant à une puissance de ladite installation motrice (20) comprise entre ladite troisième puissance caractéristique $W_{kmini}$ et ladite première puissance caractéristique $W_k$,
- on applique ledit pas collectif auxdites pales principales (12) réalisant ainsi automatiquement une descente lente vers un atterrissage,
- on ajuste ledit coefficient d'influence $k$ lors de la descente de l'aéronef (10) en fonction de la réduction de ladite hauteur Hz et par la suite ladite troisième puissance caractéristique $W_k$, et en conséquence ledit pas collectif jusqu'à l'atterrissage dudit aéronef (10).

15. Procédé selon l'une quelconque des revendications 1 à 7,
**caractérisé en ce que**, lorsque ledit véhicule (10) est un aéronef en vol de croisière, sa vitesse verticale $Vz$ étant sensiblement nulle, une série de secondes courbes de performances selon une seconde formule $W = f_2(Vh)$, $W$ étant une puissance de vol dudit aéronef (10) et $Vh$ étant ladite vitesse horizontale dudit aéronef (10), une droite horizontale tangente à ladite seconde courbe qui correspond aux conditions de vol dudit aéronef (10) permet de déterminer une quatrième puissance caractéristique $W_{end}$ dudit aéronef (10) et une première vitesse horizontale caractéristique $V_{end}$ dudit aéronef (10) permettant d'obtenir une durée maximale de vol dudit aéronef (10), ladite puissance de vol $W$ dudit aéronef (10) étant égale à la somme desdites puissances fournies par chaque moteur (21,22) de ladite installation motrice (20) déduite d'une puissance accessoire nécessaire pour alimenter des équipements dudit aéronef (10).

16. Procédé selon l'une quelconque des revendications 1 à 7,
**caractérisé en ce que**, lorsque ledit véhicule (10) (10) est un aéronef en vol de croisière, sa vitesse verticale $Vz$ étant sensiblement nulle, une série de secondes courbes de performances selon une seconde formule $W = f_2(Vh)$, $W$ étant une puissance de vol dudit aéronef (10), $Vh$ étant ladite vitesse horizontale dudit aéronef (10) et $f_2$ étant une seconde fonction représentée par une série de secondes courbes de performances de l'aéronef (10), une droite tangente à ladite seconde courbe qui correspond aux conditions de vol dudit aéronef (10) et passant par le point origine du repère de ladite seconde courbe permet de déterminer une cinquième puissance caractéristique $W_{range}$ dudit aéronef (10) et une seconde vitesse horizontale caractéristique $V_{range}$ dudit aéronef (10) permettant d'obtenir une distance franchissable maximale par ledit aéronef (10), ladite puissance de vol W dudit aéronef (10) étant égale à la somme desdites puissances fournies par chaque moteur (21,22) de ladite installation motrice (20) déduite d'une puissance accessoire nécessaire pour alimenter des équipements dudit aéronef (10).

17. Procédé selon la revendication 16,
**caractérisé en ce qu'**en cas de vent longitudinal subi par ledit aéronef (10), ladite droite tangente à ladite seconde courbe ne passe pas par ledit point origine dudit repère de ladite seconde courbe, mais par un point décalé sur l'axe des abscisses dudit point origine dudit repère selon la valeur de la vitesse dudit vent longitudinal.

18. Procédé selon l'une quelconque des revendications 1 à 7,
**caractérisé en ce que**, lorsque ledit véhicule (10) (10) est un aéronef en vol ascensionnel, sa vitesse verticale $Vz$ étant non nulle, des caractéristiques fonctionnelles dudit aéronef (10) étant notamment **caractérisées par** une série de troisièmes courbes de performances selon une troisième formule

$$\left(\frac{W}{\sigma}\right)_{Vy} = f_3\left(\frac{M}{\sigma}\right),$$ $W$ étant une puissance de vol

dudit aéronef (10), $\sigma$ étant un coefficient de réduction, $M$ étant ladite masse estimée dudit aéronef (10), $Vy$ étant une vitesse optimale de montée dudit aéronef (10), $f_3$ étant une troisième fonction représentée par une série de troisièmes courbes de performances dudit aéronef (10), le rapport $\left(\frac{W}{\sigma}\right)_{Vy}$ étant

obtenu pour une vitesse verticale $Vz$ dudit aéronef égale à ladite vitesse optimale de montée $Vy$ dudit aéronef (10), de sorte que une sixième puissance caractéristique $W_{Vy}$ dudit aéronef (10) corresponde à ladite vitesse optimale de montée $Vy$, ladite puissance de vol $W$ dudit aéronef (10) étant égale à la somme desdites puissances fournies par chaque moteur (21,22) de ladite installation motrice (20) déduite d'une puissance accessoire nécessaire pour alimenter des équipements dudit aéronef (10)

- on calcule ledit coefficient de réduction $\sigma$ tel

que $\sigma = \left(\frac{P_0}{T_0}\right)$,

- on calcule une troisième valeur $A_3$ telle que

$$A_3 = \left(\frac{M}{\sigma}\right),$$

- on détermine grâce à une troisième courbe de performances dudit aéronef (10) selon la troisième fonction $f_3$ correspondant aux conditions de vol dudit aéronef (10) et en fonction de ladite troisième valeur $A_3$ une quatrième valeur $A_4$, telle que $A_4 = f_3\left(\frac{M}{\sigma}\right)$,

- on calcule à partir de ladite quatrième valeur $A_4$, ladite sixième puissance caractéristique $W_{Vy}$ correspondant à ladite vitesse optimale de montée $Vy$, telle que $W_{Vy} = A_4 . \sigma$.

**19.** Procédé selon l'une quelconque des revendications 1 à 18, **caractérisé en ce que** ledit paramètre $P_i$ est choisi dans la liste suivante ou bien est une combinaison logique ou arithmétique d'au moins deux éléments de ladite liste suivante :

- un couple total fourni par ladite installation motrice (20) ou bien un couple en sortie du moyen de transmission mécanique de puissance (23) ou bien un couple fourni par un moteur (21,22),
- une puissance totale fournie par ladite installation motrice (20) ou bien une puissance fournie par un desdits turbomoteurs (21,22),
- une vitesse dudit véhicule (10) par rapport à l'air ou bien une vitesse dudit véhicule (10) par rapport au sol,
- une hauteur dudit véhicule (10) par rapport à une référence,
- une température à l'intérieur d'un moteur (21,22),
- une vitesse de rotation d'un élément d'un moteur (21,22).

**20.** Procédé selon l'une quelconque des revendications 1 à 19, **caractérisé en ce que**, lorsque ledit véhicule (10) est un aéronef à voilure tournante comportant un rotor principal (11) muni de pales principales (12), un rotor anticouple (13) muni de pales secondaires (14), ledit moyen de transmission mécanique de puissance (23) étant une boîte de transmission principale de puissance entraînant ledit rotor principal (11) et ledit rotor anticouple (13), des moyens de commande (24,25,26) étant des moyens de commande de la variation du pas collectif et du pas cyclique desdites pales principales (12) et du pas collectif desdites pales secondaires (14), ledit paramètre $P_i$ est choisi dans la liste suivante ou bien est une combinaison logique ou arithmétique d'au moins deux éléments de ladite liste suivante :

- un couple total fourni par ladite installation motrice (20) ou bien un couple fourni par un moteur (21,22) ou bien un couple rotor au niveau d'un mât d'entrainement en rotation dudit rotor principal (11) ou bien un couple au niveau dudit rotor anticouple (13),
- une puissance totale fournie par ladite installation motrice (20) ou bien une puissance fournie par un desdits turbomoteurs (21,22),
- une vitesse dudit aéronef (10) par rapport à l'air ou bien une vitesse dudit aéronef (10) par rapport au sol,
- une hauteur dudit aéronef (10) par rapport à une référence,
- une température à l'intérieur d'un moteur (21,22),
- une vitesse de rotation d'un élément d'un moteur (21,22),
- une position de gouverne dudit aéronef (10) ou une valeur de pas desdites pales principales (12) dudit rotor principal (11) ou bien desdites pales secondaires (14) dudit rotor anticouple (13),
- une position de commande du pas collectif desdites pales principales (12) dudit rotor principal (11),
- une position de commande du pas cyclique desdites pales principales (12) dudit rotor principal (11),
- une position de commande de pas collectif desdites pales secondaires (14) dudit rotor anticouple (13).

**21.** Procédé selon l'une quelconque des revendications 1 à 20, **caractérisé en ce que** lesdites secondes valeurs $P_i\_X$ à laquelle ledit paramètre $P_i$ doit être égal afin que ledit véhicule (10) puisse effectuer une manoeuvre $X$ prédéterminée forment une plage de valeurs dudit paramètre $P_i$.

**22.** Procédé selon l'une quelconque des revendications 2 à 21, **caractérisé en ce que**, au moins une troisième valeur $P_i\_inst$ égale à une valeur instantanée de chaque paramètre $P_i$ étant déterminée, on affiche chaque première valeur $P_i\_lim$, chaque seconde valeur $P_i\_X$ et chaque troisième valeur $P_i\_inst$ pour ledit paramètre $P_i$ parmi au moins deux paramètres $(P_i,P_j)$ pour lequel une différence entre ladite première valeur $P_i\_lim$ et la troisième valeur $P_i\_inst$ associées respectivement à chaque paramètre $(P_i,P_j)$ est la plus faible.

**23.** Dispositif (1) de détermination de paramètres caractéristiques du fonctionnement d'un véhicule (10), ledit véhicule (10) comportant une installation motrice (20) munie d'au moins un moteur (21,22) et d'un moyen de transmission mécanique de puissance (23) ainsi que des moyens de commande (24,25,26), ledit dispositif (1) comportant une pluralité de capteurs (5-8), au moins un moyen de calcul (2), au moins une mémoire (3) et au moins un moyen de visualisation (4), lesdits capteurs (5-8) fournissant des mesures de différentes informations relatives à l'environnement dudit véhicule (10) et/ou à l'état et au fonctionnement dudit véhicule (10) et de ses équipements et/ou à la position et aux déplacements dudit véhicule (10) par rapport à son environnement, chaque moyen de calcul (2) recevant lesdites mesures desdits capteurs (5-8) et traitant lesdites informations,

**caractérisé en ce que** ladite mémoire (3) stocke des courbes de performances dudit véhicule (10) et des instructions de calcul, ledit moyen de calcul (2) utilisant lesdites instructions de calcul afin de mettre en oeuvre le procédé de détermination de paramètres caractéristiques du fonctionnement dudit véhicule (10) selon l'une quelconque des revendications 1 à 22.

**Patentansprüche**

**1.** Verfahren zur Bestimmung von Kennwerten des Betriebs eines Fahrzeugs (10), wobei das Fahrzeug (10) ein Antriebsaggregat (20) aufweist mit mindestens einem Motor (21, 22) und einem mechanischen Leistungsgetriebe (23), Mitteln (24, 25, 26) zur Steuerung von Bewegungen des Fahrzeugs (10), einer Mehrzahl von Sensoren (5-8), mindestens einem Rechenmittel (2), mindestens einem Speicher (3) und mindestens einem Anzeigemittel (4), in dessen Verlauf:

- verschiedene Informationen gemessen werden bezüglich der Umgebung des Fahrzeugs (10) und/oder bezüglich des Zustands und des Betriebs des Fahrzeugs (10) und des Antriebsaggregats (20) und/oder bezüglich des Zustands der Steuermittel (24, 25, 26) und/oder bezüglich der Position und der Bewegungen des Fahrzeugs (10) relativ zu seiner Umgebung,
- eine verfügbare Leistungsmarge eines jeden Motors (21, 22) des Antriebsaggregats (20) gegenüber einer minimalen garantierten Leistung bestimmt wird, wobei die verfügbare Leistungsmarge einen Alterungszustand eines jeden Motors (21, 22) des Antriebsaggregats (20) kennzeichnet,
- für jeden Motor (21, 22) des Antriebsaggregats (20) eine maximal verfügbare Leistung bestimmt wird unter Berücksichtigung der verfügbaren Leistungsmarge,
- mindestens eine charakteristische Leistung eines jeden Motors (21, 22) des Antriebsaggregats (20), die der Durchführung einer vorbestimmten Betätigung X des Fahrzeugs (10) entspricht, bestimmt wird,
- mindestens ein erster Wert $P_{i\_lim}$ bestimmt wird, der der maximal verfügbaren Leistung eines jeden Motors (21, 22) des Antriebsaggregats (20) entspricht, und der einem Grenzwert entspricht, den ein Parameter $P_i$ nicht überschreiten darf, wobei $P_i$ ein Parameter bezüglich des Zustands oder des Betriebs des Fahrzeugs (10) ist, oder der dem Zustand oder dem Betrieb des Antriebsaggregats (20) entspricht oder der dem Zustand der Steuermittel (24, 25, 26) oder der Position oder den Bewegungen des Fahrzeugs (10) relativ zu seiner Umgebung entspricht,
- mindestens ein zweiter Wert $P_i\_X$ bestimmt wird, der einer charakteristischen Leistung eines jeden Motors (21, 22) für die Durchführung einer vorbestimmten Betätigung X des Fahrzeugs (10) entspricht und der gleich dem Parameter $P_i$ sein muss, damit das Fahrzeug (10) die vorbestimmte Betätigung X ausführen kann und
- gleichzeitig in ein und derselben graphischen Darstellung jeder erste Wert $P_i\_lim$ und jeder zweite Wert $P_i\_X$ angezeigt wird, um klar die Relativlage eines ersten Werts $P_i\_lim$ gegenüber jedem zweiten Wert $P_i\_X$ für jeden Parameter $P_i$ hervorzuheben.

**2.** Verfahren nach Anspruch 1,
**dadurch gekennzeichnet, dass** :

- die momentane Leistung $Wm_{inst}$, die von jedem Motor (21, 22) des Antriebsaggregats (20) geliefert wird, bestimmt wird,
- mindestens ein dritter Wert $P_i\_inst$ bestimmt wird, der der momentanen Leistung $Wm_{inst}$ entspricht, die von jedem Motor (21, 22) geliefert wird und der gleich einem momentanen Wert eines jeden Parameters $P_i$ ist, und
- auf der graphischen Darstellung jeder dritte Wert $P_i\_inst$ angezeigt wird.

**3.** Verfahren nach einem der Ansprüche 1 bis 2,
**dadurch gekennzeichnet, dass** jeder zweite Wert $P_i\_X$ und jeder dritte Wert $P_i\_inst$ gegebenenfalls auf dem Anzeigemittel (4) mit einem Prozentsatz gegenüber dem ersten Wert $P_i\_lim$, der dem Parameter $P_i$ entspricht, angezeigt wird.

**4.** Verfahren nach einem der Ansprüche 1 bis 2,
**dadurch gekennzeichnet, dass** jeder erste Wert

$P_{i\_}lim,$ jeder zweite Wert $P_{i\_}X$ und jeder dritte Wert $P_{i\_}inst$ gegebenenfalls auf dem Anzeigemittel (4) mit einem Prozentsatz gegenüber einem Referenzwert des Parameters $P_i$ angezeigt wird.

5. Verfahren nach einem der Ansprüche 1 bis 2, **dadurch gekennzeichnet, dass** das Fahrzeug (10) ein Drehflügel-Luftfahrzeug ist mit einem Hauptrotor (11), der mit Hauptrotorblättern (12) versehen ist, einem Steuermittel (24, 25, 26), welches ein Mittel zur Steuerung der Änderung des kollektiven Anstellwinkels der Hauptrotorblätter (12) ist, die Werte des kollektiven Anstellwinkels der Hauptrotorblätter (12), die jeweils jedem ersten Wert $P_{i\_}lim,$ jedem zweitem Wert $P_{i\_}X$ und jedem dritten Wert $P_{i\_}inst$ entsprechen, bei Bedarf auf dem Anzeigemittel (4) angezeigt werden.

6. Verfahren nach einem der Ansprüche 2 bis 5, **dadurch gekennzeichnet, dass** jeder erste Wert $P_{i\_}lim,$ jeder zweite Wert $P_{i\_}X$ und jeder dritte Wert $P_{i\_}inst$ auf einem Gerät der ersten Begrenzung IPL des Fahrzeugs (10) angezeigt wird.

7. Verfahren nach einem der Ansprüche 1 bis 6, **dadurch gekennzeichnet, dass** eine geschätzte momentane Masse $M_{inst}$ des Fahrzeugs (10) bestimmt wird, um jede charakteristische Leistung zu bestimmen.

8. Verfahren nach Anspruch 7, **dadurch gekennzeichnet, dass** ausgehend von einer maximalen verfügbaren Gesamtleistung des Antriebsaggregats (20), die gleich der Summe der maximalen verfügbaren Leistung eines jeden Motors (21, 22) ist, eine maximale, von dem Fahrzeug (10) transportierbare Masse bestimmt wird, wobei die maximale transportierbare Masse gleich der Differenz zwischen der Masse des Fahrzeugs (10), für das eine von dem Antriebsaggregat (20) gelieferte Gesamtleistung gleich der maximalen verfügbaren Gesamtleistung gemäß Leistungskurven des Fahrzeugs (10) unter Berücksichtigung der verfügbaren Leistungsmarge ist, und der geschätzten momentanen Masse $M_{inst}$ des Fahrzeugs (10).

9. Verfahren nach einem der Ansprüche 1 bis 7, **dadurch gekennzeichnet, dass** das Fahrzeug (10) ein Drehflügel-Luftfahrzeug ist mit einem Hauptrotor (10), der mit Hauptrotorblättern (12) versehen ist, einem Gegendrehmomentrotor (13) mit sekundären Rotorblättern (14), wobei das mechanische Leistungsgetriebe (23) ein Hauptleistungsgetriebe ist, welches den Hauptrotor (11) und den Gegendrehmomentrotor (13) dreht, während sich das Luftfahrzeug (10) in einem stationären Schwebeflug befindet, wobei dessen horizontale Geschwindigkeit $Vh$ und dessen vertikale Geschwindigkeit $Vz$ im Wesentlichen null sind, wobei die Betriebskennwerte des Luftfahrzeugs (10) insbesondere **gekennzeichnet sind durch** eine Reihe von ersten Leistungskurven gemäß einer ersten Formel $\frac{W}{\sigma} \cdot \left(\frac{NR_0}{NR}\right)^3 = k.f_1\left[\frac{M}{\sigma} \cdot \left(\frac{NR_0}{NR}\right)^2\right]$, wobei $W$ eine Flugleistung des Luftahrzeugs (10) ist, $\sigma$ ein Reduktionskoeffizient ist, $k$ ein Koeffizient des Einflusses des Bodens auf das Verhalten des Luftfahrzeugs (10) in Abhängigkeit von der Flughöhe $Hz$ des Luftfahrzeugs (10) relativ zum Boden ist, $M$ die geschätzte Masse des Luftfahrzeugs (10) ist, $NR_0$ eine Soll-Drehgeschwindigkeit des Hauptrotors (11) ist, $NR$ die reale Drehgeschwindigkeit des Hauptrotors (11) ist und $f_1$ eine erste Funktion ist, die dargestellt wird durch eine Reihe erster Leistungskurven des Luftfahrzeugs (10), wobei die Flugleistung $W$ des Luftfahrzeugs (10) gleich der Summe der Leistungen ist, die von jedem Motor (21, 22) des Antriebsaggregats (20) geliefert werden, abzüglich einer Zusatzleistung, die notwendig ist, um die Geräte des Luftfahrzeugs (10) zu speisen, wobei

- der Reduktionskoeffizient $\sigma$ berechnet wird durch $\sigma = \left(\frac{Po}{To}\right),$
- ein erster Wert $A_1$ berechnet wird durch
$$A_1 = \frac{M}{\sigma} \cdot \left(\frac{NR_0}{NR}\right)^2,$$
- die Flughöhe $Hz$ des Luftfahrzeugs (10) relativ zum Boden gemessen wird,
- mit Hilfe einer ersten Kurve der Leistungen des Luftfahrzeugs (10) gemäß einer ersten Funktion $f_1$, die den Flugbedingungen des Luftfahrzeugs (10) entspricht, und in Abhängigkeit von dem ersten Wert $A_1$ ein zweiter Wert $A_2$ bestimmt wird durch $A_2 = f_1\left[\frac{M}{\sigma} \cdot \left(\frac{NR_0}{NR}\right)^2\right],$
- ausgehend von dem zweiten Wert $A_2$ eine erste charakteristische Leistung $W_k$ des Luftfahrzeugs (10) in dem Fall eines stationären Schwebeflugs außerhalb der Wirkung des Bodens oder mit der Wirkung des Bodens gemäß dem Einflusskoeffizienten $k$ durch
$$W_k = k.A_2.\sigma.\left(\frac{NR}{NR_0}\right)^3$$ berechnet wird.

10. Verfahren nach Anspruch 9, **dadurch gekennzeichnet, dass** der Einflusskoeffizient $k$ als 1 definiert wird, was einem stationären Schwebeflug ohne Wirkung des Bodens des Luftfahrzeugs (10) entspricht und ausgehend von dem

zweiten Wert $A_2$ eine zweite charakteristische Leistung $Wk = 1$ des Luftfahrzeugs (10) für den Fall eines stationären Schwebeflugs ohne Wirkung des Bodens des Luftfahrzeugs (10) durch $W_{k=1}$ =

$$A_2.\sigma.\left(\frac{NR}{NR_0}\right)^3 \text{ berechnet wird.}$$

11. Verfahren nach Anspruch 10,
    **dadurch gekennzeichnet, dass** auf einer Skala (60), die die Flughöhe des Luftfahrzeugs (10) über dem Boden darstellt, eine Markierung (61) angezeigt wird, die die niedrigste Flughöhe $Hz_k$ angibt, die dem Fall entspricht, in dem $k$ gleich 1 ist.

12. Verfahren nach Anspruch 9, **dadurch gekennzeichnet, dass**

    - der Einflusskoeffizient $k$ definiert wird als gleich einem minimalen Wert $k_{mini}$, der einem stationären Schwebeflug des Luftfahrzeugs (10) auf der Höhe des Bodens entspricht und
    - ausgehend von dem zweiten Wert $A_2$ die dritte charakteristische Leistung $W_{kmini}$ des Luftfahrzeugs (10) in dem Fall eines stationären Schwebeflugs des Luftfahrzeugs (10) auf der Höhe des Bodens durch

    $$W_{kmini} = k_{mini}.A_2.\sigma.\left(\frac{NR}{NR_0}\right)^3 \text{ berechnet}$$

    wird.

13. Verfahren nach Anspruch 9,
    **dadurch gekennzeichnet, dass**

    - der Einflusskoeffizient $k$ definiert wird als gleich einem minimalen Wert $k_{mini}$, der einem stationären Schwebeflug des Luftfahrzeugs (10) auf der Höhe des Bodens entspricht,
    - ausgehend von dem zweiten Wert $A_2$ eine dritte charakteristische Leistung $W_{kmini}$ des Luftfahrzeugs (10) in dem Fall eines stationären Schwebeflugs auf der Höhe des Bodens durch

    $$W_{kmini} = k_{mini}.A_2.\sigma.\left(\frac{NR}{NR_0}\right)^3 \text{ berechnet}$$

    wird,
    - ein Gesamtdrehmoment bestimmt wird, das das Antriebsaggregat (20) liefern muss, welches einer Leistung des Antriebsaggregats (20) entspricht, die zwischen der dritten charakteristischen Leistung $W_{kmini}$ und der ersten charakteristischen Leistung $W_k$ liegt,
    - das Gesamtdrehmoment an das Antriebsaggregat (20) angelegt wird, wodurch somit automatisch ein langsamer Sinkflug für eine Landung erzeugt wird,

    - der Einflusskoeffizient $k$ während des Sinkflugs des Luftfahrzeugs (10) in Abhängigkeit von der Verkleinerung der Flughöhe Hz justiert wird und dann die erste charakteristische Leistung $W_k$ justiert wird und somit das Gesamtdrehmoment, das das Antriebsaggregat (20) bis zur Landung des Luftfahrzeugs (10) liefern muss.

14. Verfahren nach Anspruch 9,
    **dadurch gekennzeichnet, dass** die Steuermittel (24, 25, 26) Mittel zur Steuerung der Änderung des kollektiven Verstellwinkels und des zyklischen Verstellwinkels der Hauptrotorblätter (12) sind, wobei

    - der Einflusskoeffizient $k$ definiert wird als gleich einem minimalen Wert $k_{mini}$, der einem stationären Schwebeflug des Luftfahrzeugs (10) auf der Höhe des Bodens entspricht,
    - ausgehend von dem zweiten Wert $A_2$ eine dritte charakteristische Leistung $W_{kmini}$ des Luftfahrzeugs (10) in dem Fall eines stationären Schwebeflugs auf der Höhe des Bodens durch

    $$W_{kmini} = k_{mini}.A_2.\sigma.\left(\frac{NR}{NR_0}\right)^3 \text{ berechnet}$$

    wird,
    - ein kollektiver Verstellwinkel der Hauptrotorblätter (12) bestimmt wird, der einer Leistung des Antriebaggregats (20) entspricht, die zwischen der dritten charakteristischen Leistung $W_{kmini}$ und der ersten charakteristischen Leistung $W_k$ liegt,
    - der kollektive Verstellwinkel auf die Hauptrotorblätter (12) angewendet wird, um somit automatisch einen langsamen Sinkflug zu einer Landung auszuführen,
    - der Einflusskoeffizient $k$ während des Sinkflugs des Luftfahrzeugs (10) in Abhängigkeit von der Verkleinerung der Flughöhe Hz justiert wird und anschließend die dritte charakteristische Leistung $W_k$ und somit der kollektive Verstellwinkel bis zur Landung des Luftfahrzeugs (10).

15. Verfahren nach einem der Ansprüche 1 bis 7, **dadurch gekennzeichnet, dass**, wenn das Fahrzeug (10) ein Luftfahrzeug im Reiseflug ist, wobei seine vertikale Geschwindigkeit $Vz$ im Wesentlichen null ist, eine Reihe von zweiten Leistungskurven gemäß einer zweiten Formel $W = f_2(Vh)$, wobei $W$ eine Flugleistung des Luftfahrzeugs (10) ist und $Vh$ die horizontale Geschwindigkeit des Luftfahrzeugs (10) ist, und eine horizontale gerade Linie, die die zweite Kurve berührt, die den Flugbedingungen des Luftfahrzeugs (10) entspricht, es erlauben, eine vierte charakteristische Leistung $W_{end}$ des Luftfahrzeugs (10) und eine erste charakteristische horizontale Geschwindigkeit $V_{end}$ des Luftfahrzeugs (10) zu bestimmen, die es erlaubt, eine maximale Flugdauer des Luftfahrzeugs (10) zu erhalten, wobei die Flugleistung $W$ des Luftfahrzeugs (10) gleich der Summe der von jedem Motor (21, 22) des Antriebsaggregats (20) gelieferten Leistungen ist, abzüglich einer Zusatzleistung, die notwendig ist, um die Geräte des Luftfahrzeugs (10) zu speisen.

16. Verfahren nach einem der Ansprüche 1 bis 7, **dadurch gekennzeichnet, dass**, wenn das Fahrzeug (10) ein Luftfahrzeug im Reiseflug ist, wobei seine vertikale Geschwindigkeit $Vz$ im Wesentlichen null ist, eine Reihe von zweiten Leistungskurven nach einer zweiten Formel $W = f_2(Vh)$, wobei $W$ eine Flugleistung des Luftfahrzeugs (10) ist, $Vh$ die horizontale Geschwindigkeit des Luftfahrzeugs (10) ist und $f_2$ eine zweite Funktion ist, die dargestellt wird durch eine Reihe zweiter Leistungskurven des Luftfahrzeugs (10), und eine gerade Linie, die die zweite Kurve berührt, die den Flugbedingungen des Luftfahrzeugs (10) entspricht und durch den Ursprungspunkt des Koordinatensystems der zweiten Kurve verläuft, es erlauben, eine fünfte charakteristische Leistung $W_{range}$ des Luftfahrzeugs (10) und eine zweite horizontale charakteristische Geschwindigkeit $V_{range}$ des Luftfahrzeugs (10) zu bestimmen, die es erlaubt, eine Distanz zu erhalten, die maximal von dem Luftfahrzeug (10) erreichbar ist, wobei die Flugleistung $W$ des Luftfahrzeugs (10) gleich der Summe der Leistungen ist, die von jedem Motor (21, 22) des Antriebsaggregats (20) geliefert wird, abzüglich einer Zusatzleistung, die notwendig ist, um die Geräte des Luftfahrzeugs (10) zu speisen.

17. Verfahren nach Anspruch 16,
**dadurch gekennzeichnet, dass** im Fall eines Linkswindes, der von dem Luftfahrzeug (10) erfahren wird, die gerade Linie, die die zweite Kurve berührt, nicht durch den Ursprungspunkt des Koordinatensystems der zweiten Kurve verläuft, sondern durch einen Punkt, der versetzt auf der Abszisse des Ursprungspunktes des Koordinatensystems liegt, gemäß der Größe der Geschwindigkeit des Längswindes.

18. Verfahren nach einem der Ansprüche 1 bis 7,
**dadurch gekennzeichnet, dass**, wenn das Fahrzeug (10) ein Luftfahrzeug im Steigflug ist, dessen vertikale Geschwindigkeit $Vz$ nicht null ist, die Betriebskennwerte des Luftfahrzeugs (10) insbesondere charakterisiert sind durch eine Reihe dritter Leistungskurven gemäß einer dritten Formel $\left(\dfrac{W}{\sigma}\right)_{Vy} = f_3\left(\dfrac{W}{\sigma}\right)$, wobei $W$ eine Flugleistung des Luftfahrzeugs (10) ist, $\sigma$ ein Verminderungskoeffizient ist, $M$ die geschätzte Masse des Luftfahrzeugs (10) ist, $Vy$ eine optimale Steiggeschwindigkeit des Luftfahrzeugs (10) ist, $f_3$ eine dritte Funktion ist, die durch eine Reihe dritter Leistungskurven des Luftfahrzeugs (10) dargestellt wird, das Verhältnis $\left(\dfrac{W}{\sigma}\right)_{Vy}$ erhalten wird durch eine vertikale Geschwindigkeit $Vz$ des Luftfahrzeugs, die gleich der optimalen Steiggeschwindigkeit $Vy$ des Luftfahrzeugs (10) ist, derart, dass eine sechste Leistungscharakteristik $W_{Vy}$ des Luftfahrzeugs (10) der optimalen Steiggeschwindigkeit $V_y$ entspricht, wobei die Flugleistung $W$ des Luftfahrzeugs (10) gleich der Summe der Leistungen ist, die von jedem Motor (21, 22) des Antriebsaggregats (20) geliefert wird, abzüglich einer Zusatzleistung, die notwendig ist, um die Geräte des Luftfahrzeugs (10) zu speisen, wobei

- der Verminderungskoeffizient $\sigma$ berechnet wird durch $\sigma = \left(\dfrac{P_0}{T_0}\right)$,

- ein dritter Wert $A_3$ berechnet wird, so dass
$$A_3 = \left(\frac{M}{\sigma}\right),$$

- mit Hilfe einer dritten Leistungskurve des Luftfahrzeugs (10) gemäß einer dritten Funktion $f_3$, die den Flugbedingungen des Luftfahrzeugs (10) entspricht, und in Abhängigkeit von dem dritten Wert $A_3$ ein vierter Wert $A_4$ bestimmt wird,

so dass $A_3 = \left(\dfrac{M}{\sigma}\right),$

- ausgehend von dem vierten Wert $A_4$ die sechste Leistungscharakteristik $W_{Vy}$ berechnet wird, die der optimalen Steiggeschwindigkeit $V_y$ entspricht, so dass $W_{Vy} = A_4.\sigma$.

19. Verfahren nach einem der Ansprüche 1 bis 18, **dadurch gekennzeichnet, dass** der Parameter $P_i$ aus der folgenden Liste gewählt wird oder eine logische oder arithmetische Kombination mindestens zweier Elemente der folgenden Liste ist:

- ein Gesamtdrehmoment, das von dem Antriebsaggregat (20) geliefert wird, oder ein Ausgangsdrehmoment des mechanischen Leistungsgetriebes (23) oder ein Drehmoment, das von einem Motor (21, 22) geliefert wird,
- eine Gesamtleistung, die von dem Antriebsaggregat (20) geliefert wird, oder eine Leistung, die von den Turbomotoren (21, 22) geliefert wird,
- eine Geschwindigkeit des Fahrzeugs (10) relativ zur Luft oder eine Geschwindigkeit des Fahrzeugs (10) relativ zum Boden,
- eine Flughöhe des Fahrzeugs (10) relativ zu einem Referenzwert,

- eine Innentemperatur eines Motors (21, 22),
- eine Drehgeschwindigkeit eines Elements eines Motors (21, 22).

20. Verfahren nach einem der Ansprüchen 1 bis 19, **dadurch gekennzeichnet, dass**, wenn das Fahrzeug (10) ein Luftfahrzeug mit Drehflügeln ist, welches einen Hauptrotor (11), der mit Hauptrotorblättern (12) versehen ist, einen Gegendrehmomentrotor (13) mit sekundären Rotorblättern (14) aufweist, wobei das Hauptleistungsgetriebe (23) ein Hauptleistungsgetriebe ist, welches den Hauptrotor (11) und den Gegendrehmomentrotor (13) antreibt, wobei die Steuermittel (24, 25, 26) Mittel zur Steuerung der Änderung der kollektiven Winkelverstellung und der zyklischen Winkelverstellung der Hauptrotorblätter (12) und der kollektiven Winkelverstellung der sekundären Rotorblätter (14) sind, wobei der Parameter $P_i$ aus der folgenden Liste ausgewählt ist oder logische oder arithmetische Kombinationen aus mindestens zwei Elementen der folgenden Liste ist:

  - ein Gesamtdrehmoment, das von dem Antriebsaggregat (20) geliefert wird, oder ein Drehmoment, das von einem Motor (21, 22) geliefert wird, oder ein Rotordrehmoment auf der Höhe einer Drehantriebswelle des Hauptrotors (11), oder ein Drehmoment auf der Höhe des Gegendrehmomentrotors (13),
  - eine Gesamtleistung, die von dem Antriebsaggregat (20) geliefert wird, oder eine Leistung, die von einem der Turbomotoren (21, 22) geliefert wird,
  - eine Geschwindigkeit des Luftfahrzeugs (10) gegenüber der Luft oder eine Geschwindigkeit des Luftfahrzeugs (10) gegenüber dem Boden,
  - eine Flughöhe des Luftfahrzeugs (10) relativ zu einem Bezugspunkt,
  - eine Temperatur im Inneren eines Motors (21, 22),
  - eine Rotationsgeschwindigkeit eines Elements eines Motors (21, 22),
  - eine Stellung eines Ruders des Luftfahrzeugs (10) oder ein Wert der Winkelverstellung der Hauptrotorblätter (12) des Hauptrotors (11) oder der sekundären Rotorblätter (14) des Gegendrehmomentrotors (13),
  - eine Steuerstellung der kollektiven Rotorblattverstellung der Hauptrotorblätter (12) des Hauptrotors (11),
  - eine Steuerstellung der zyklischen Rotorblattverstellung der Hauptrotorblätter (12) des Hauptrotors (11),
  - eine Steuerstellung der kollektiven Rotorblattverstellung der sekundären Rotorblätter (14) des Gegendrehmomentrotors (13).

21. Verfahren nach einem der Ansprüche 1 bis 20, **dadurch gekennzeichnet, dass** die zweiten Werte $P_{i\_X}$, die gleich dem Parameter $P_i$ sein müssen, damit das Fahrzeug (10) eine vorbestimmte Betätigung X ausführen kann, einen Wertebereich des Parameters $P_i$ bilden.

22. Verfahren nach einem der Ansprüche 2 bis 21, **dadurch gekennzeichnet, dass** mindestens ein dritter Wert $P_{i\_inst}$, der gleich einem momentanen Wert eines jeden Parameters $P_i$ ist, bestimmt wird, und jeder erste Wert $P_{i\_lim}$, jeder zweite Wert $P_{i\_X}$ und jeder dritte Wert $P_{i\_inst}$ für den Parameter $P_i$ unter mindestens zwei Parameter $P_i$, $P_j$, für den eine Differenz zwischen dem ersten Wert $P_{i\_lim}$ und dem dritten Wert $P_{i\_inst}$, die jeweils mit jedem Parameter ($P_i$, $P_j$) verbunden sind, am niedrigsten ist, angezeigt werden.

23. Vorrichtung (1) zur Bestimmung von Kennwerten des Betriebs eines Fahrzeugs (10), wobei das Fahrzeug ein Antriebsaggregat (20) aufweist, das mit mindestens einem Motor (21, 22) und einem mechanischen Leistungsgetriebe (23) sowie mit Steuermitteln (24, 25, 26) versehen ist, wobei die Vorrichtung (1) eine Mehrzahl von Sensoren (5-8), mindestens ein Rechenmittel (2), mindestens einen Speicher (3) und mindestens ein Anzeigemittel (4) aufweist, wobei die Sensoren (5-8) Messungen verschiedener Informationen bezüglich einer Umgebung des Fahrzeugs (10) und/oder bezüglich des Zustandes und des Betriebs des Fahrzeugs (10) und dessen Geräten und/oder bezüglich der Lage und der Bewegungen des Fahrzeugs (10) relativ zu seiner Umgebung liefern, wobei jedes Rechenmittel (2) die Messungen der Sensoren (5-8) empfängt und diese Informationen verarbeitet, **dadurch gekennzeichnet, dass** der Speicher (3) Leistungskurven des Fahrzeugs (10) und Rechenbefehle speichert, wobei das Rechenmittel (2) die Rechenbefehle verwendet, um das Verfahren zur Bestimmung von Kennwerten des Betriebes des Fahrzeugs (10) nach einem der Ansprüche 1 bis 22 auszuführen.

**Claims**

1. Method for determining characteristic parameters of the operation of a vehicle (10), said vehicle (10) comprising a powerplant (20) provided with at least one motor (21, 22) and a mechanical power transmission means (23), control means (24, 25, 26) for controlling the movements of said vehicle (10), a plurality of sensors (5-8), at least one calculation means (2), at least one memory (3) and at least one display means (4),
during which method

- various pieces of information relating to the surroundings of said vehicle (10) and/or to the state and the operation of said vehicle (10) and said powerplant (20), and/or to the state of said control means (24, 25, 26), and/or to the position and to the movements of said vehicle (10) relative to the surroundings thereof are measured,
- an available power margin of each motor (21, 22) of said powerplant (20) with respect to a minimum guaranteed power is determined, said available power margin being characteristic of a state of ageing of each motor (21, 22) of said powerplant (20),
- a maximum available power is determined at each motor (21, 22) of said powerplant (20), taking into account said available power margin,
- at least one characteristic power of each motor (21, 22) of said powerplant (20) that corresponds to the implementation of a predetermined manoeuvre $X$ of said vehicle (10) is determined,
- at least one first value $P_i\_lim$ that corresponds to said maximum available power of each motor (21, 22) of said powerplant (20) and to a limit value that a parameter $P_i$ may not exceed is determined, $P_i$ being a parameter relating to the state or the operation of said vehicle (10), or to the state or the operation of said powerplant (20), or to the state of said control means (24, 25, 26), or to the position or to the movements of said vehicle (10) relative to the surroundings thereof,
- at least one second value $P_i\_X$ that corresponds to a characteristic power of each motor (21, 22) for implementing a predetermined manoeuvre $X$ of said vehicle (10) and to which said parameter $P_i$ must be equal in order for said vehicle (10) to be able to carry out said predetermined manoeuvre $X$ is determined, and
- each first value $P_i\_lim$ and each second value $P_i\_X$ are displayed simultaneously on the same graphical representation in order to clearly show the relative position of a first value $P_i\_lim$ with respect to each second value $P_i\_X$ for each parameter $P_i$.

2. Method according to claim 1, **characterised in that**:

- an instantaneous power $Wm_{inst}$ provided by each motor (21, 22) of said powerplant (20) is determined,
- at least one third value $P_i\_inst$ that corresponds to said instantaneous power $Wm_{inst}$ provided by each motor (21, 22) and that is equal to an instantaneous value of each parameter $P_i$ is determined, and
- each third value $P_i\_inst$ is displayed on said graphical representation.

3. Method according to either claim 1 or claim 2, **characterised in that** each second value $P_i\_X$ and each third value $P_i\_inst$ are displayed, as appropriate, on said display means (4) in accordance with a percentage with respect to said first value $P_i\_lim$ that corresponds to said parameter $P_i$.

4. Method according to either claim 1 or claim 2, **characterised in that** each first value $P_i\_lim$, each second value $P_i\_X$ and each third value $P_i\_inst$ are displayed, as appropriate, on said display means (4) in accordance with a percentage with respect to a reference value of said parameter $P_i$.

5. Method according to either claim 1 or claim 2, **characterised in that**, said vehicle (10) being a rotary-wing aircraft comprising a main rotor (11) provided with main blades (12), a control means (24, 25, 26) being a control means for controlling the variation in the collective pitch of said main blades (12), collective pitch values of the main blades (12) that correspond in each case to each first value $P_i\_lim$, to each second value $P_i\_X$ and to each third value $P_i\_inst$ are displayed, as appropriate, on said display means (4).

6. Method according to any of claims 2 to 5, **characterised in that** each first value $P_i\_lim$, each second value $P_i\_X$ and each third value $P_i\_inst$ are displayed on a First Limit Indicator (FLI) of said vehicle (10).

7. Method according to any of claims 1 to 6, **characterised in that** an estimated instantaneous mass $M_{inst}$ of said vehicle (10) is determined in order to determine each characteristic power.

8. Method according to claim 7, **characterised in that** a maximum mass that is transportable by said vehicle (10) is determined from a total maximum available power at said powerplant (20) that is equal to the sum of said maximum available powers at each motor (21, 22), said maximum transportable mass being the difference between the mass of said vehicle (10) for which a total power provided by said powerplant (20) is equal to said total maximum available power according to the performance curves of said vehicle (10), taking into account said available power margin and said estimated instantaneous mass $M_{inst}$ of said vehicle (10).

9. Method according to any of claims 1 to 7, **characterised in that**, said vehicle (10) being a rotary-wing aircraft comprising a main rotor (11) provided with main blades (12) and a tail rotor (13) provided with secondary blades (14), said mechanical power transmission means (23) being a main gearbox that rotates said main rotor (11) and said tail rotor (13), when said aircraft (10) is in hovering flight, the horizontal speed $Vh$ thereof and the vertical speed $Vz$ thereof being substantially zero, the functional characteristics of said aircraft (10) being in particular **characterised by** a series of first performance curves according to a first formula

$$\frac{W}{\sigma} \cdot \left(\frac{NR_0}{NR}\right)^3 = k.f_1 \left[\frac{M}{\sigma} \cdot \left(\frac{NR_0}{NR}\right)^2\right],$$ $W$ being a flight power of said aircraft (10), $\sigma$ being a reduction coefficient, $k$ being a ground influence coefficient for the behaviour of said aircraft (10) as a function of the height $Hz$ of said aircraft (10) relative to said ground, $M$ being said estimated mass of said aircraft (10), $NR_0$ being a nominal speed of rotation of said main rotor (11), $NR$ being the actual speed of rotation of said main rotor (11), and $f_1$ being a first function represented by a series of first performance curves of said aircraft (10), said flight power $W$ of said aircraft (10) being equal to the sum of said powers provided by each motor (21, 22) of said powerplant (20) minus a secondary power required for powering the equipment of said aircraft (10),

- said reduction coefficient $\sigma$ is calculated such that $\sigma = \left(\frac{P_0}{T_0}\right),$

- a first value $A_1$ is calculated such that

$$A_1 = \frac{M}{\sigma} \cdot \left(\frac{NR_0}{NR}\right)^2,$$

- said height $Hz$ of said aircraft (10) relative to said ground is measured,
- said influence coefficient $k$ corresponding to said height $Hz$ is determined,
- a second value $A_2$ is determined, using a first performance curve of said aircraft (10) in accordance with the first function $f_1$ that corresponds to the flight conditions of said aircraft (10) and as a function of said first value $A_1$, such that

$$A_2 = f_1 \left[\frac{M}{\sigma} \cdot \left(\frac{NR_0}{NR}\right)^2\right],$$

- a first characteristic power $W_k$ of said aircraft (10) in the event of hovering flight without the ground effect or with the ground effect according to said influence coefficient $k$ is calculated such that $W_k = k.A_2.\sigma.\left(\frac{NR}{NR_0}\right)^3.$

10. Method according to claim 9, **characterised in that**

- said influence coefficient k that is equal to 1 and corresponds to hovering flight without the ground effect of said aircraft (10) is defined, and a second characteristic power $W_{k=1}$ of said aircraft (10) in the event of hovering flight without the ground effect of said aircraft (10) is calculated from said second value $A_2$, such that

$$W_{k=1} = A_2.\sigma.\left(\frac{NR}{NR_0}\right)^3.$$

11. Method according to claim 10, **characterised in that** a reference point 61 indicating the lowest height $Hz_k$ corresponding to the coefficient $k$ that is equal to 1 is displayed on a scale (60) representing the height $Hz$ of the aircraft (10) relative to the ground.

12. Method according to claim 9, **characterised in that**

- said influence coefficient $k$ that is equal to a minimal value $k_{mini}$ and corresponds to hovering flight of said aircraft (10) close to the ground is defined, and
- said third characteristic power $W_{kmini}$ of said aircraft (10) in the event of hovering flight of said aircraft (10) close to the ground is calculated, from said second value $A_2$, such that

$$W_{kmini} = k_{mini}.A_2.\sigma.\left(\frac{NR}{NR_0}\right)^3.$$

13. Method according to claim 9, **characterised in that**

- said influence coefficient $k$ that is equal to a minimal value $k_{mini}$ and corresponds to hovering flight of said aircraft (10) close to the ground is defined, and
- a third characteristic power $W_{kmini}$ of said aircraft (10) in the event of hovering flight close to the ground is calculated, from said second value $A_2$, such that

$$W_{kmini} = k_{mini}.A_2.\sigma.\left(\frac{NR}{NR_0}\right)^3,$$

- a total torque that said powerplant (20) must provide, corresponding to a power of said powerplant (20) between said third characteristic power $W_{kmini}$ and said first characteristic power $W_k$, is determined,
- said total torque is applied to said powerplant (20), thus automatically causing a slow descent to landing,
- said influence coefficient k is adjusted, during the descent of the aircraft (10), as a function of the reduction of said height $Hz$ and subsequently of said first characteristic power $W_k$, and conse-

quently said total torque that said powerplant (20) must provide, until said aircraft (10) has landed.

14. Method according to claim 9, **characterised in that**, control means (24, 25, 26) being means for controlling the variation in the collective pitch and the cyclic pitch of said main blades (12),

- said influence coefficient $k$ that is equal to a minimal value $k_{mini}$ and corresponds to hovering flight of said aircraft (10) close to the ground is defined, and
- a third characteristic power $W_{kmini}$ of said aircraft (10) in the event of hovering flight close to the ground is calculated, from said second value $A_2$, such that

$$W_{kmini} = k_{mini}.A_2.\sigma.\left(\frac{NR}{NR_0}\right)^3,$$

- a collective pitch of said main blades (12) corresponding to a power of said powerplant (20) that is between said third characteristic power $W_{kmini}$ and said first characteristic power $W_k$ is determined,
- said collective pitch is applied to said main blades (12), thus automatically causing a slow descent to landing,
- said influence coefficient $k$ is adjusted, during the descent of the aircraft (10), as a function of the reduction of said height $Hz$ and subsequently of said third characteristic power $W_k$, and consequently said collective pitch, until said aircraft (10) has landed.

15. Method according to any of claims 1 to 7, **characterised in that**, when said vehicle (10) is an aircraft in cruising flight, the vertical speed $Vz$ thereof being substantially zero, a series of second performance curves according to a second formula $W = f_2(Vh)$, $W$ being a flight power of said aircraft (10) and $Vh$ being said horizontal speed of said aircraft (10), a horizontal straight line tangent to said second curve that corresponds to the flight conditions of said aircraft (10) makes it possible to determine a fourth characteristic power $W_{end}$ of said aircraft (10) and a first characteristic horizontal speed $V_{end}$ of said aircraft (10) that makes it possible to achieve a maximum flight duration of said aircraft (10), said flight power $W$ of said aircraft (10) being equal to the sum of said powers provided by each motor (21, 22) of said powerplant (20) minus a secondary power required for powering the equipment of said aircraft (10).

16. Method according to any of claims 1 to 7, **characterised in that**, when said vehicle (10) (10) is an aircraft in cruising flight, the vertical speed $Vz$ thereof being substantially zero, a series of second performance curves according to a second formula $W = f_2(Vh)$, $W$ being a flight power of said aircraft (10) and $Vh$ being said horizontal speed of said aircraft (10) and $f_2$ being a second function represented by a series of second performance curves of the aircraft (10), a straight line tangent to said second curve that corresponds to the flight conditions of said aircraft (10) and passes through the origin of the reference point of said second curve makes it possible to determine a fifth characteristic power $W_{range}$ of said aircraft (10) and a second characteristic horizontal speed $V_{range}$ of said aircraft (10) that makes it possible to achieve a maximum range of said aircraft (10), said flight power $W$ of said aircraft (10) being equal to the sum of said powers provided by each motor (21, 22) of said powerplant (20) minus a secondary power required for powering the equipment of said aircraft (10).

17. Method according to claim 16, **characterised in that**, in the event of said aircraft (10) experiencing longitudinal wind, said straight line tangent to said second curve does not pass through the origin of said reference point of said second curve, but through a point that is offset on the X axis of said origin of said reference point according to the value of the speed of said longitudinal wind.

18. Method according to any of claims 1 to 7, **characterised in that**, when said vehicle (10) (10) is a climbing aircraft, the vertical speed $Vz$ thereof being non-zero, functional characteristics of said aircraft (10) being **characterised in** particular by a series of third performance curves according to a third formula

$$\left(\frac{W}{\sigma}\right)_{Vy} = f_3\left(\frac{M}{\sigma}\right),$$ $W$ being a flight power of said

aircraft (10), $\sigma$ being a reduction coefficient, $M$ being said estimated mass of said aircraft (10), $Vy$ being a best climb speed of said aircraft (10), $f_3$ being a third function represented by a series of third performance curves of said aircraft (10), the relation

$\left(\frac{W}{\sigma}\right)_{Vy}$ being obtained for a vertical speed $Vz$ of said aircraft that is equal to said best climb speed $Vy$ of said aircraft (10), such that a sixth characteristic power $Wv_y$ of said aircraft (10) corresponds to said best climb speed $Vy$, said flight power $W$ of said aircraft (10) being equal to the sum of said powers provided by each motor (21, 22) of said powerplant (20) minus a secondary power required for powering the equipment of said aircraft (10),

- said reduction coefficient $\sigma$ is calculated such

that $\sigma = \left(\frac{P_0}{T_0}\right)$,

- a third characteristic value $A_3$ is calculated such that $A_3 = \left(\frac{M}{\sigma}\right)$,

- a fourth value $A_4$ is determined, using a third performance curve of said aircraft (10) in accordance with the third function $f_3$ that corresponds to the flight conditions of said aircraft (10) and as a function of said third value $A_3$, such that

$$A_4 = f_3\left(\frac{M}{\sigma}\right),$$

- said sixth characteristic power $Wv_y$ corresponding to said best climb value $Vy$ is calculated, from said fourth value $A_4$, such that $W_{Vy} = A_4.\sigma$.

19. Method according to any of claims 1 to 18, **characterised in that** said first parameter $P_i$ is selected from the following list or is a logical or arithmetic combination of at least two elements from the following list:

     - a total torque provided by said powerplant (20) or an output torque of the mechanical power transmission means (23) or a torque provided by a motor (21, 22),
     - a total power provided by said powerplant (20) or a power provided by one of said turbine engines (21, 22),
     - a speed of said vehicle (10) relative to the air or a speed of said vehicle (10) relative to the ground,
     - a height of said vehicle (10) relative to a reference,
     - a temperature inside a motor (21, 22),
     - a speed of rotation of an element of a motor (21, 22).

20. Method according to any of claims 1 to 19, **characterised in that**, when said vehicle (10) is a rotary-wing aircraft comprising a main rotor (11) provided with main blades (12) and a tail rotor (13) provided with secondary blades (14), said mechanical power transmission means (23) being a main gearbox that drives said main rotor (11) and said tail rotor (13), control means (24, 25, 26) being means for controlling the variation in the collective pitch and the cyclic pitch of said main blades (12) and the collective pitch of said secondary blades (14), said parameter $Pi$ is selected from the following list or is a logical or arithmetic combination of at least two elements from the following list:

     - a total torque provided by said powerplant (20) or a torque provided by a motor (21, 22) or a rotor torque in the region of a pylon for rotating said main rotor (11) or a torque in the region of said tail rotor (13),
     - a total power provided by said powerplant (20) or a power provided by one of said turbine engines (21, 22),
     - a speed of said aircraft (10) relative to the air or a speed of said aircraft (10) relative to the ground,
     - a height of said aircraft (10) relative to a reference,
     - a temperature inside a motor (21, 22),
     - a speed of rotation of an element of a motor (21, 22),
     - a control surface position of said aircraft (10) or a pitch value of said main blades (12) of said main rotor (11) or of said secondary blades (14) of said tail rotor (13),
     - a control position of the collective pitch of said main blades (12) of said main rotor (11),
     - a control position of the cyclic pitch of said main blades (12) of said main rotor (11),
     - a control position of the collective pitch of said secondary blades (14) of said tail rotor (13).

21. Method according to any of claims 1 to 20, **characterised in that** said second values $P_i\_X$ to which said parameter $P_i$ must be equal in order for said vehicle (10) to be able to carry out a predetermined manoeuvre $X$ form a range of values of said parameter $P_i$.

22. Method according to any of claims 2 to 21, **characterised in that**, at least one third value $P_i\_inst$ that is equal to an instantaneous value of each parameter $P_i$ being determined, each first value $P_i\_lim,$ each second value $P_i\_X$ and each third value $P_i\_inst$ for said parameter $P_i$ from at least two parameters ($P_i$, $P_j$) for which a difference between said first value $P_i\_lim$ and the third value $P_i\_inst,$ associated respectively with each parameter ($P_i$, $P_j$), is lowest, are displayed.

23. Device (1) for determining characteristic parameters of the operation of a vehicle (10), said vehicle (10) comprising a powerplant (20) provided with at least one motor (21, 22), a mechanical power transmission means (23) and control means (24, 25, 26), said device (1) comprising a plurality of sensors (5-8), at least one calculation means (2), at least one memory (3) and at least one display means (4), said sensors (5-8) providing measurements of various pieces of information relating to the surroundings of said vehicle (10) and/or to the state and to the operation of said vehicle (10) and of the equipment thereof, and/or to the position and to the movements of said vehicle (10) relative to the surroundings thereof, each calculation means (2) receiving said measurements from said sensors (5-8) and processing said information, **characterised in that** said memory (3) stores performance curves of said vehicle (10) and calculation instructions, said calculation means (2) using said calculation instructions in order to implement the method for determining characteristic parameters of the operation of said vehicle (10) according to any of claims 1 to 22.

**Fig.1**

**Fig.2**

**Fig.3**

Fig.4

Fig.5

Fig.6

Fig.7

$$\frac{W}{\sigma}\left(\frac{NR_O}{NR}\right)^3$$

$$\frac{M}{\sigma}\left(\frac{NR_O}{NR}\right)^2$$

**Fig.8**

**Fig.9**

**Fig.10**

## RÉFÉRENCES CITÉES DANS LA DESCRIPTION

**Documents brevets cités dans la description**

- FR 2749545
- FR 2756256
- WO 2006081334 A
- US 2005278084 A
- EP 2505502 A
- DE 29703902